# EUROPEAN PATENT SPECIFICATION

(11) **EP 0 691 453 B1**
(45) Date of publication and mention of the grant of the patent: **10.01.2001**
(21) Application number: 95304785.9
(22) Date of filing: 10.07.1995
(51) Int. Cl.: E06C 7/10, F16B 5/04, F16B 37/04

(54) **A ladder, member for connecting a rail to a horizontal element of a ladder, and method, and apparatus and method for holding a washer**
Leiter, Befestigungselement eines Holme an einem Sprassen einer Leiter und Verfahren, und Vorrichtung und Verfahren zum Festhalten einer Unterlegscheibe
Echelle, élément de connexion d'un montant à un échelon de l'échelle et procédé, et dispositif et procédé pour retenir une rondelle

(30) Priority: 08.07.1994 US 272154; 21.04.1995 US 426194
(43) Date of publication of application: 10.01.1996
(73) Proprietor: WERNER CO., Greenville, PA 16125 (US)
(72) Inventor: Plotner, David E., Greenville, PA 16125 (US); Heald, Edward E., Greenville, PA 16125 (US); McIntire, Kevin L., Sandy Lake, PA 16145 (US); Sulecki, Richard P., Greenville, PA 16125 (US); Hetrich, Mitchell H., Greenville, PA 16125 (US); Bartnicki, Frederick J., Greenville, PA 16125 (US)
(74) Representative: Cheyne, John Robert Alexander Mackenzie

(56) References cited:
- EP-A- 0 277 379
- EP-A- 0 331 098
- GB-A- 2 223 791
- US-A- 1 961 781
- US-A- 3 005 513
- US-A- 4 049 082
- US-A- 4 940 377
- US-A- 5 074 378
- US-A- 5 158 151

## Description

### FIELD OF THE INVENTION

The present invention is related to ladders. More specifically, the present invention relates to a member for connecting a rail to a horizontal element, such as a step or a horizontal of a ladder. Additionally, the present invention is related to a method and apparatus for holding a washer. More specifically, the present invention is related to a method and apparatus for holding a washer so a person's fingers cannot be injured by a riveter.

### BACKGROUND OF THE INVENTTION

Ladders experience horizontal as well as vertical forces while they are used. To better respond to the horizontal forces that may be experienced by the ladder, knee braces have been used to connect the bottom step or horizontal with a rail. The present invention is directed to an improved knee brace that has been combined with a rail support and preferably a foot to better respond to horizontal forces, and increase manufacturing efficiency.

It is a common practice when riveting two objects together, such as the improved knee brace to the rail of a ladder, if the rivet upset surface is non-metal, to use a washer with a rivet. If it is required of a worker to place the washer in position onto the rivet, there exists the possibility that the operation of the riveter can cause injury to the fingers of the worker. The present invention eliminates the need for a worker to place his fingers into a position where the riveter can injure the fingers of the worker.

GB-A-2223791 discloses a ladder comprising a brace in L-form with U-shaped cross-section. At a join, at least three faces of brace and counterpart, stile or step, come into contact to provide rigidity.

According to the present invention there is provided a ladder as claimed in claim 1. In accordance with the present invention the second portion of the brace has a contact surface which conforms with the rail and extends along the rail portion so that the forces which cause the ladder to twist are better withstood by being transferred to the rail and ultimately to the ground.

For a better understanding of the present invention and to show how the same may be carried into effect reference will now be made, by way of example, to the accompanying drawings, in which:-

Figure 1 is a schematic representation of a member of the present invention connecting a rail to a horizontal element.

Figures 2, 2a, 2b, 2c, 2d, 2e and 2f are various schematic representations of a rear member of the present invention.

Figures 3, 3a, 3b, 3c, 3d, 3e, 3f, 3g and 3h are various schematic representations of a rear member of the present invention.

Figure 4 is a schematic representation of an embodiment of a rear member connected to a horizontal and a rear side rail.

Figure 5a is a schematic representation of an embodiment of a front member of the present invention connected to a horizontal member and a side rail.

Figures 5b and 5c are schematic representations of a front projected view and an underside projected view, respectively, of another embodiment of a member connected to a horizontal member and a side rail.

Figures 5d and 5e are schematic representations of a front view and an underside projected view, respectively, of yet another embodiment of a member connected to a side rail and a horizontal member.

Figures 5f, 5g and 5h are underside projected views, side views and close-up side views, respectively, of the embodiment of the member shown in figures 5b and 5c attached with the embodiment of the member shown in figures 5d and 5e.

Figures 6a, 6b and 6c are schematic representations of a front projected view, an underside projected view and an overhead view, respectively, of yet another embodiment of a member of the present invention connected to a side rail and a horizontal member.

Figure 7 is a schematic representation of a projected view of a ladder having front members and rear members of the present invention.

Figures 8a and 8b are schematic representations of a straight ladder and an extension ladder, respectively.

Figures 9a, 9b, 9c, 9d and 9e are schematic representations of another embodiment of a member of the present invention for nonsupporting ladders.

Figures 10a, 10b and 10c are schematic representations of a member of the present invention for nonsupporting ladders.

Figures 11a and 11b are schematic representations of a member of the present invention for a stepladder.

Figures 12a, 12b, 12c and 12d are schematic representations of a member of the present invention for a stepladder.

Figure 13 is a schematic representation of an apparatus for holding a washer of the present invention.

Figure 14 is a schematic representation of an apparatus for holding a washer of the present invention in a rail protector.

Figure 15 is an overhead schematic representation of the apparatus.

Figure 16 is a front view of the apparatus.

Figure 17 is a side view of the apparatus.

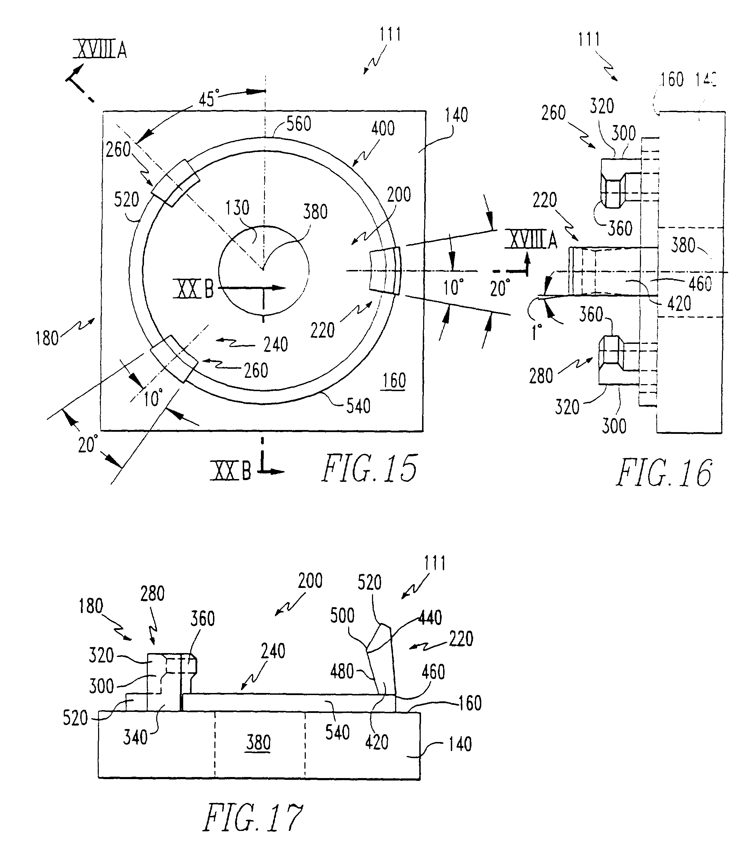

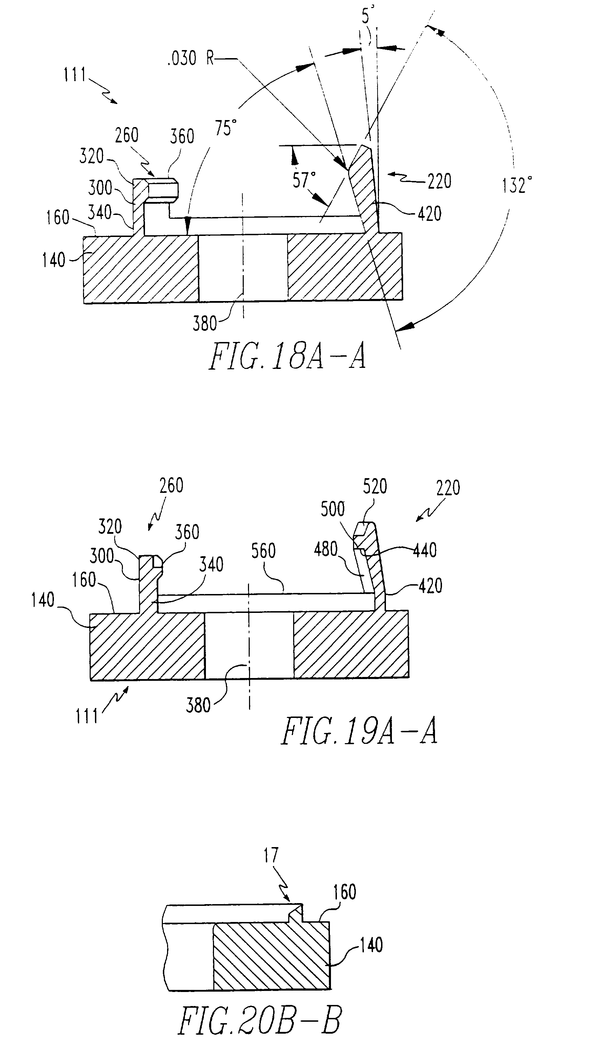

Figure 18A-A is a sectional view of Section A-A of figure 15.

Figure 19A-A is a schematic representation of a sectional view of Section A-A of figure 15.

Figure 20B-B is a sectional view of Section B-B of figure 15.

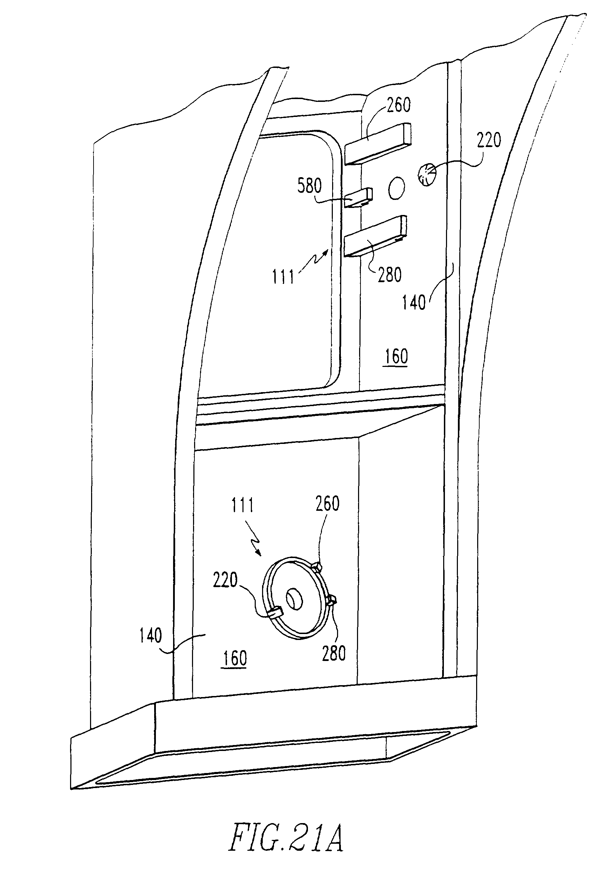

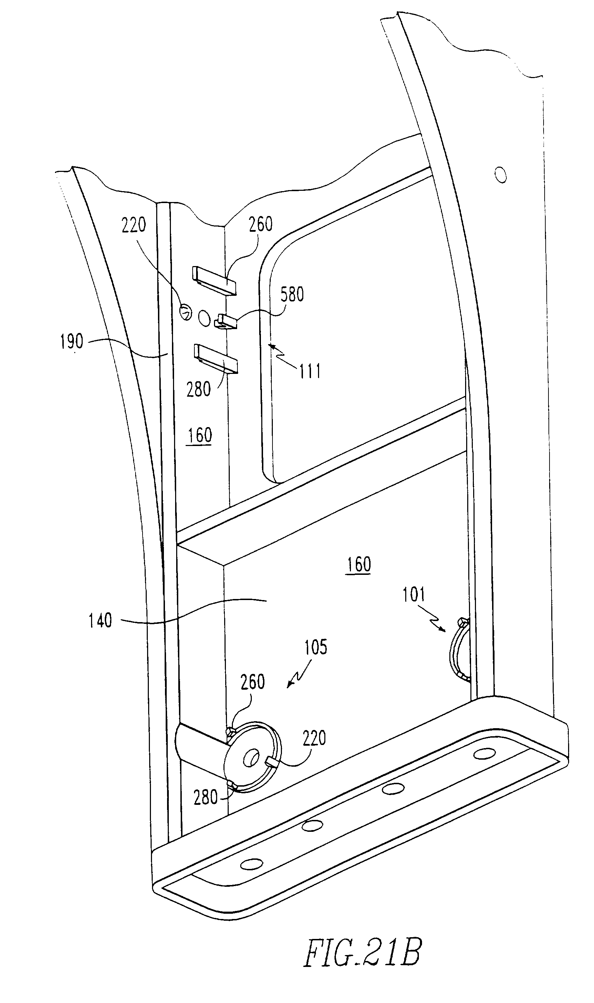

Figure 21A and 21B are schematic representations of the apparatus that is part of a knee brace-rail-foot for a rail of a ladder.

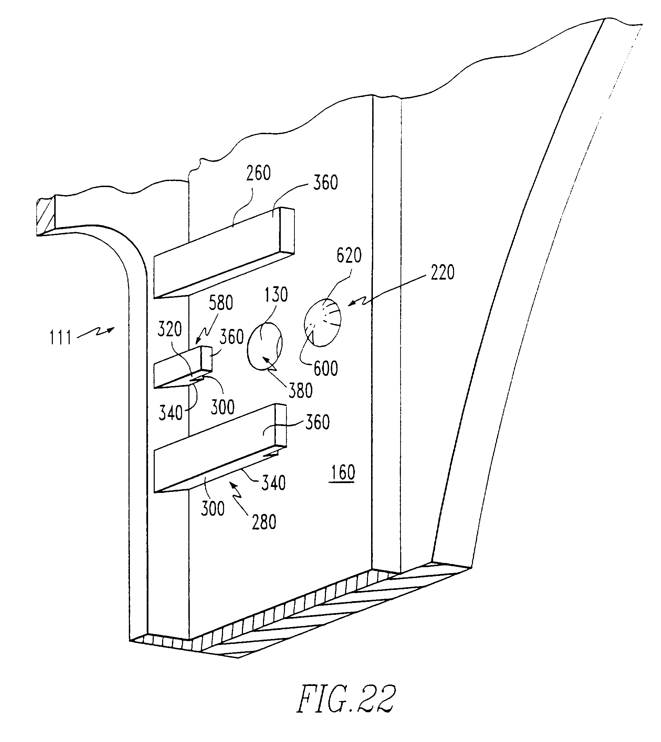

Figure 22 is a schematic representation of an alternative embodiment of the apparatus for holding a washer of the present invention.

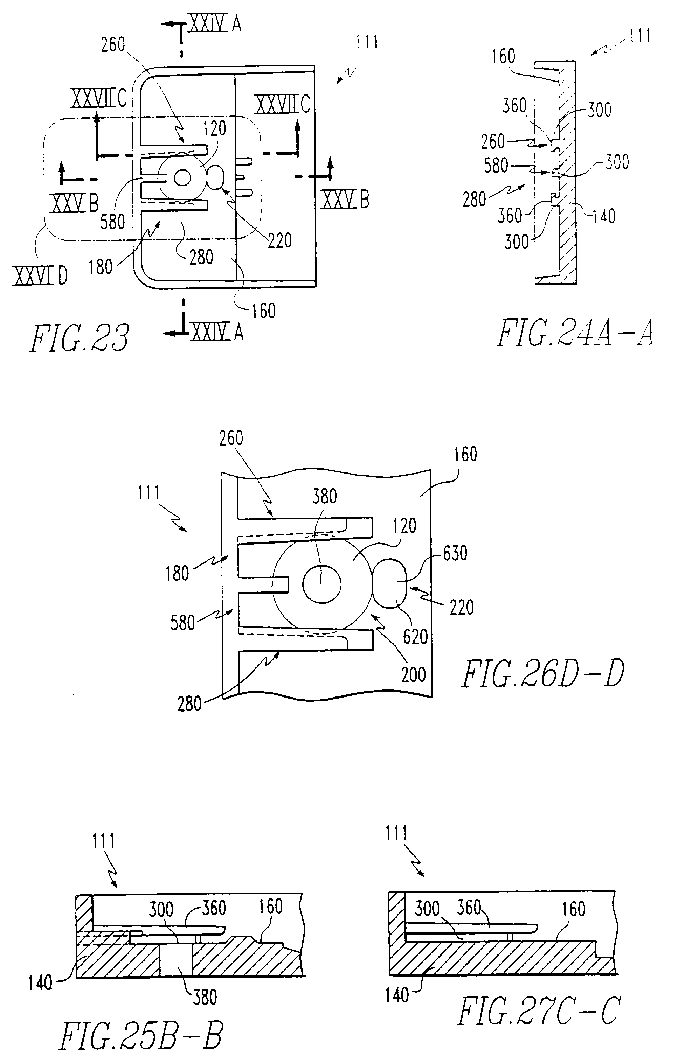

Figure 23 is a schematic representation of an overhead view of the alternative embodiment of the apparatus.

Figure 24A-A is a schematic representation of a sectional view of Section A-A of figure 23.

Figure 25B-B is a schematic representation of Section B-B of figure 23.

Figure 26D-D is a schematic representation of Section D-D of figure 23.

Figure 27C-C is a schematic representation of Section C-C of figure 23.

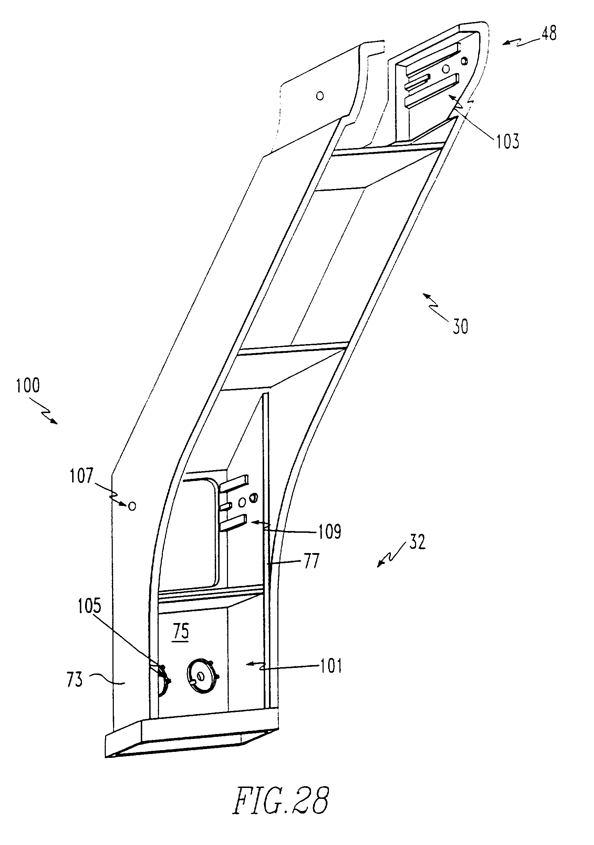

Figure 28 is a schematic representation of a perspective view of a member of the present invention having apparatuses for holding a washer.

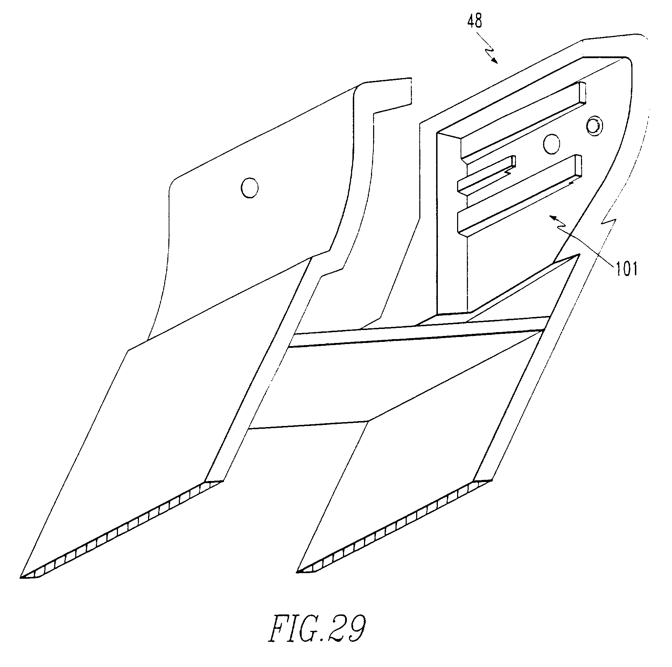

Figure 29 is a schematic representation of a portion of a member of the present invention which specifically shows a flange.

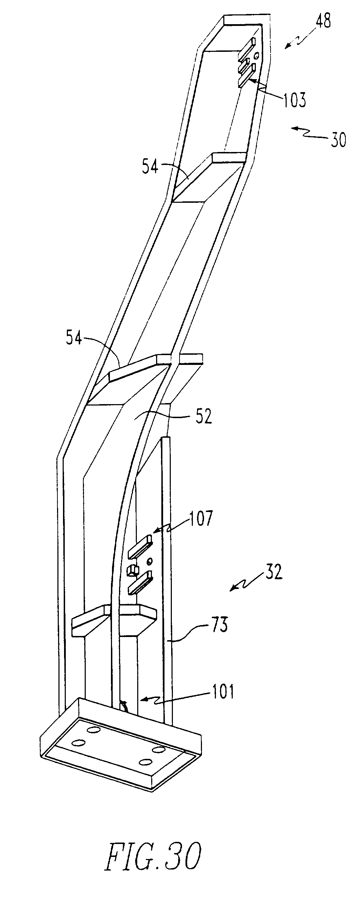

Figure 30 is a schematic representation of a perspective view of an alternative embodiment of a member of the present invention having apparatuses for holding a washer.

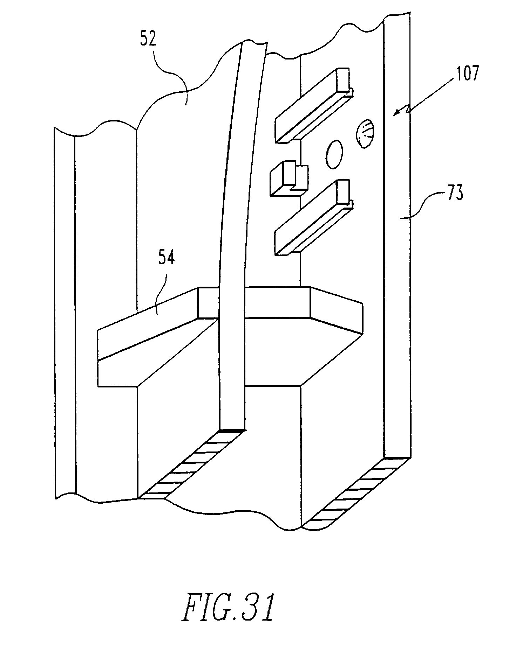

Figure 31 is a schematic representation of a portion of the alternative embodiment of the member of the present invention which specifically shows a rib and an apparatus for holding a washer.

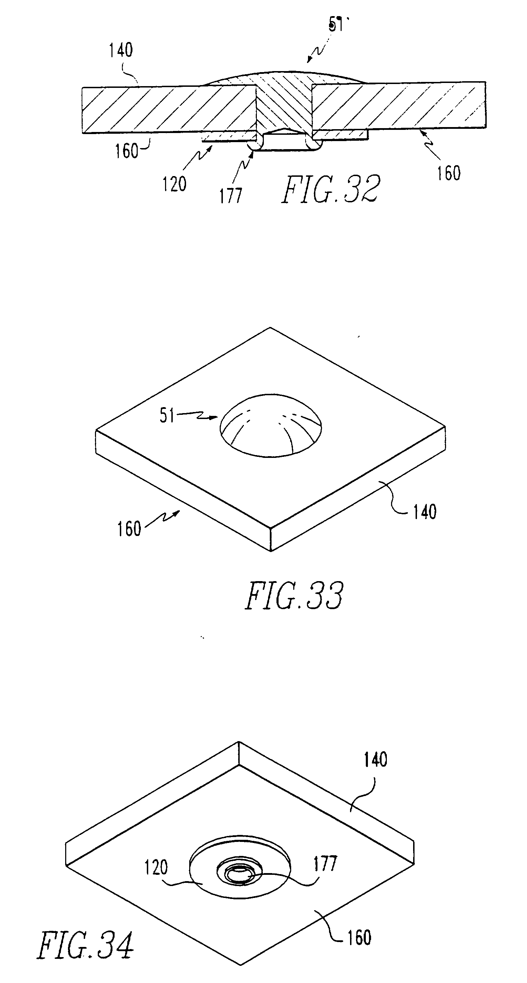

Figure 32 is a schematic representation of a cross sectional view of a rivet in plastic.

Figure 33 is a schematic representation of a top view of a rivet in plastic.

Figure 34 is a schematic representation of a bottom view of a rivet in a backing made of plastic.

### DESCRIPTION OF THE PREFERRED EMBODIMENT

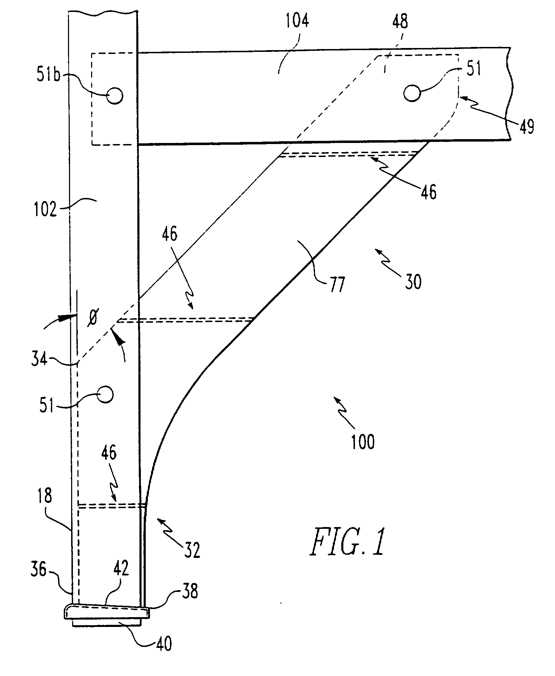

Referring now to the drawings wherein like reference numerals refer to similar or identical parts throughout the several views, and more specifically to figures 1 and 28 thereof, there is shown a member 100 for connecting a rail 102 to a horizontal element 104, such as a step or a horizontal, of a ladder. The member 100 comprises a first portion 30 that connects to the horizontal member 104. The first portion 30 preferably includes a second apparatus 103 for holding a washer 120. Preferably, the first portion 30 includes a flange portion 48 which connects to the horizontal member 104. The flange portion 48 preferably includes the second apparatus 103 for holding a washer 120, as shown in figure 29. Additionally, the member 100 comprises a second portion 32 which connects to the side rail 102 and extends essentially in parallel with the side rail 102. The second portion 32 is integrally connected to the first portion 30 such that the first portion 30 and second portion 32 are one continuous piece. The second portion preferably includes a first apparatus 101 for holding a washer 120. The second portion 32 is in an angular relationship of less than 90° with the first portion 30. Preferably, the first portion 30 forms an angle θ of 30-60° and preferably 42° with the second portion 32.

The second portion 32 preferably has a first end 34 connected to the first portion 30 and a second end 36. Preferably, the member 100 includes a foot 38 integrally connected to the second end 36 of the second portion 32 to form one continuous piece therewith. Preferably, the foot 38 is angled to be disposed flat relative to the ground when the rail 102 to which it is attached is in an operable position. The foot 38 is disposed to receive the bottom 18 of the side rail 102 so weight on the side rail 102 is transferred to the foot 38 of the second portion 32 when the rail 102 is in an operable position. Preferably, the first portion 30, second portion 32 and foot 38 are one continuous piece of plastic, but the material also could be metal, or a composite, such as graphite or fiberglass. The member 100 preferably includes a foot pad 40 which contacts the ground when the rail 102 to which the member 100 is attached is in an operable position. The foot pad 40 is attached to the bottom 42 of the foot 38. Preferably, the second portion 32 has a contact surface 44 which extends along and conforms with the rail 102 to which it is attached so forces can be transferred therebetween.

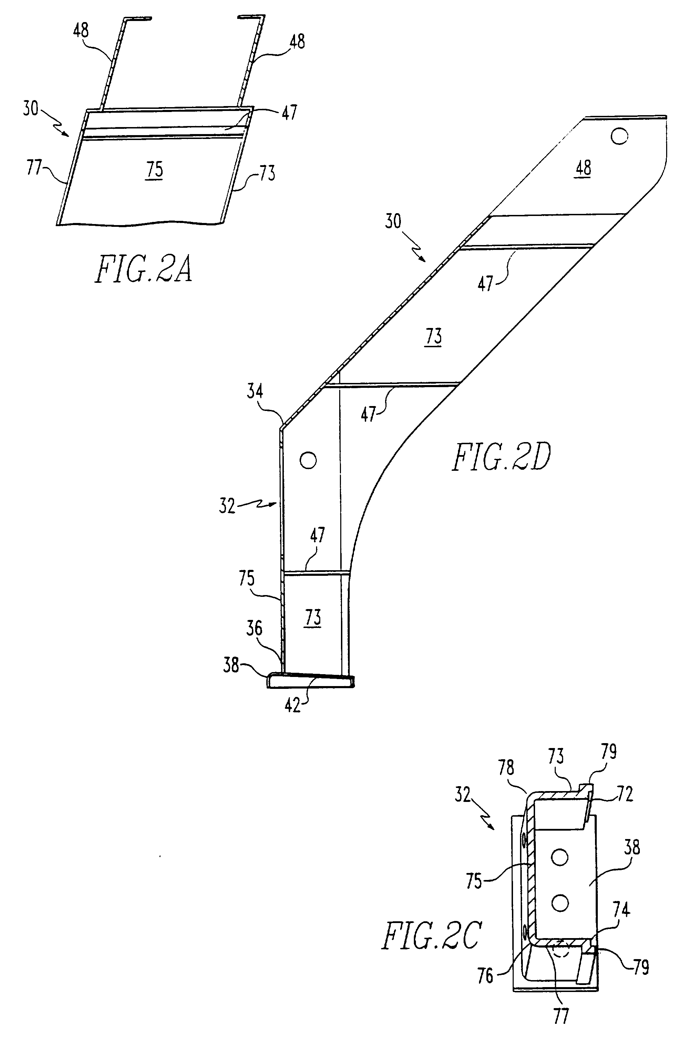

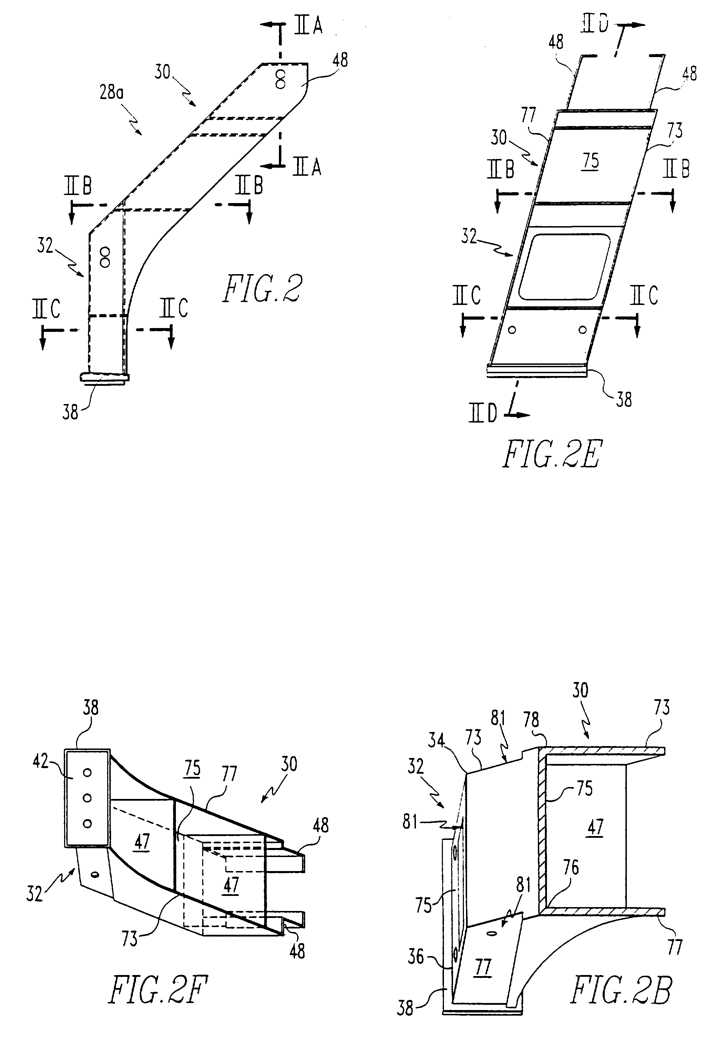

Preferably, the first portion 30 and second portion 32 include buttressing 46. In one embodiment, where the member 100 can be used on a front section 64 of a ladder 10, the first portion 30 and second portion 32 have a C-shaped cross section (although an appropriate structural configuration can be used), and the buttressing 46 includes cross plates 47 disposed in predetermined locations of the first and second portions, as shown in figures 2, 2a, 2b, 2c, 2d, 2e and 2f. Preferably, the C-shaped cross section of the second portion 32 is comprised of a first arm 73, as shown in figure 2c. There is a central body 75 to which the first arm 73 is integrally connected at essentially a right angle. The C-shaped cross section of the second portion 32 is also comprised of a second arm 77 which is integrally connected at essentially a right angle to the central body 75 at its end 76 opposite the end 78 the first arm 73 is integrally connected to the central body 75. The first arm 73 and second arm 77 are essentially in parallel with each other. At the end 72 of the first arm 73 and the end 74 of the second arm 77 not connected to the central body 75, there is a second portion flange 79 which extends outward. The second portion flange 79 on the first arm 73 and the second arm 77, the first arm 73, the central body 75 and the second arm 77 define a channel 81, as shown in figure 2b, which receive the rail 102. Preferably, the central body 75, first arm 73 and second arm 77 of the second portion 32 has the first apparatus 101 and a third apparatus 105 for holding a washer 120, and a fourth apparatus 107, and a fifth apparatus 109 for holding a washer, respectively, as shown in figure 28.

The C-shaped cross section of the first portion 30, as shown in figure 2b, has a first arm 73 integrally connected at essentially a right angle with a central body 75, and a second arm 77 integrally connected at essentially a right angle with the central body 75 at the end 76 opposite the end 78 of the central body 75 to which the first arm 73 is connected. The first arm 73 and the second arm 77 of the cross section of the first portion 30 are essentially in parallel. The flange portion 48 of the first portion 30 extends from the first arm 73 and second arm 77, as shown in figure 2a. The cross plates 47 are integrally connected with the first arm 73, central body 75 and second arm 77 and form one continuous piece with the first and second portions.

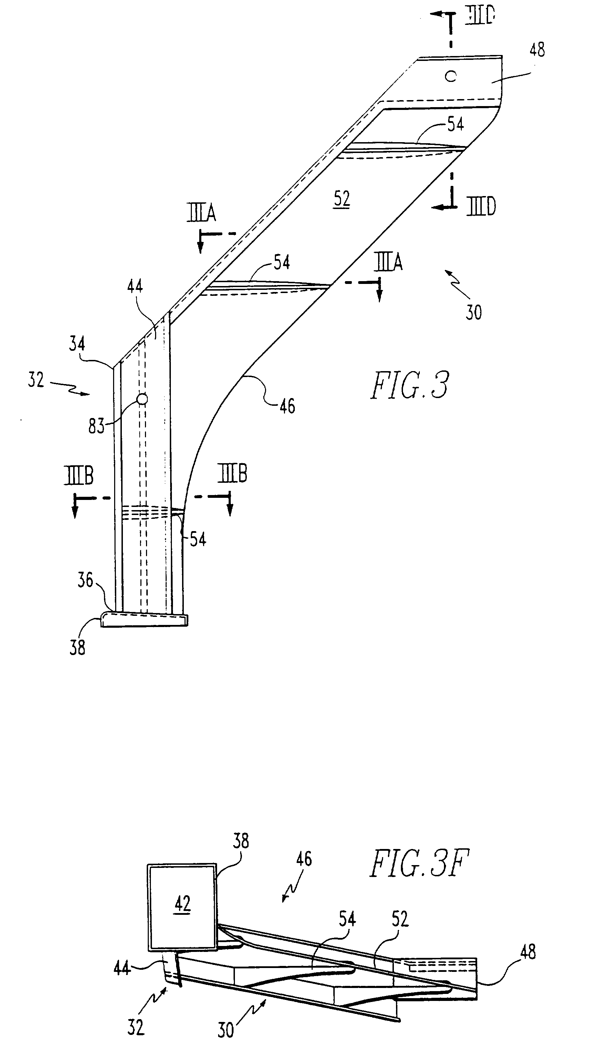

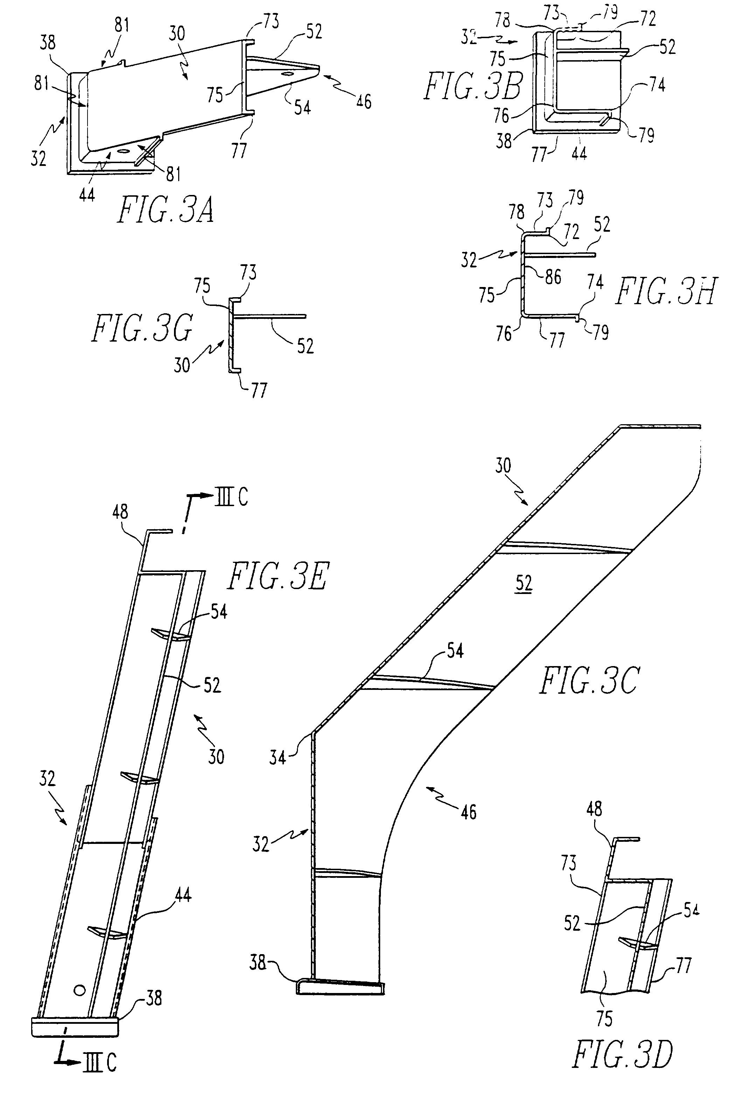

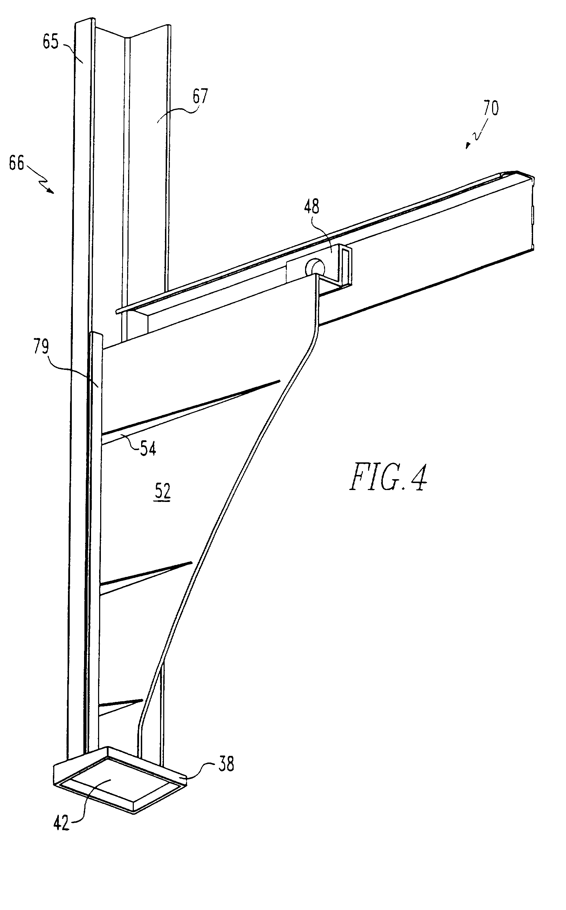

In another embodiment, as shown in figures 3, 3a, 3b, 3c, 3d, 3e, 3f, 3g and 3h, the member 100 can be used on a rear section 74 of a ladder 10. In this embodiment, the first and second portions have a C-shaped cross section, and the buttressing 46 includes a rib 52 extending essentially the length of the member 100. The rib 52 has struts 54. The C-shaped cross section of the second portion 32 preferably has a first arm 73, as shown in figures 3b and 3h. There is also a central body 75 integrally connected with the first arm 73 at one end 78 essentially at a right angle. The C-shaped cross section of the second portion 32 also comprises a second arm 77 integrally connected to the central body 75 at its end 76 opposite the end 78 of the central body 75 connected to the first arm 73. The second arm 77 essentially forms a right angle with the central body 75 and is essentially in parallel with the first arm 73. The first arm 73 is preferably of a shorter length than the second arm 77. The rib 52, struts 54, first arm 73, central body 75 and second arm 77 are one continuous piece. At the end 72 of the first arm 73 and the end 74 of the second arm 77 not connected to the central body 75, there is a second portion flange 79 that extends outward. The second portion flange 79 along with the second arm 77, first arm 73 and central body 75 define a channel 81, as shown in figure 3a, to which the rail 102 fits into and specifically contacts the contact surface 44 of the second portion 32. The rib 52 is connected to the central portion 75 offset from its center and closer to the first arm 73. This is because the rear side rail 66 to which the member 100 in this embodiment is connected is typically of a shape that has a first rail flange 65 that is of a shorter width than a second rail flange 67, as shown in figure 4. By offsetting the rib 52 in the manner described, it serves to better protect against twisting and failure of the member 100 and compensates for the structural configuration to which the member 100 is connected.

The C-shaped cross section of the first portion 30, as shown in figures 3a and 3g, also has a first arm 73 integrally connected at essentially a right angle to a central portion 75 and a second arm 77 integrally connected at essentially a right angle to the central body 75 at the end 76 of the central body 75 opposite the end 78 to which the first arm 73 is connected to it. The first arm 73 and second arm 77 of the cross section of the first portion 30 are much smaller relative to the length of the first arm 73 and second arm 77 of the second portion 32. The rib 52 is also connected to the central body 75 offset from its center and closer to the first arm 73 in the same relation as in the second portion 32. The rib 52, struts 54, first arm 73, central body 75 and second arm 77 are one continuous piece. The flange portion 48 extends from the first arm 73. Preferably, the central body 75 has the first apparatus 101 for holding a washer 120, and the first arm 73 has a fourth apparatus 107 for holding a washer 120, respectively, as shown in figures 30 and 31.

Accordingly, the present invention pertains to a member 100 for connecting a rail 102 having a first rail flange 65 and a second rail flange 67 to a horizontal element 104 of a ladder. The member 100 comprises a first arm 73 which connects to the first rail flange 65 and the horizontal member 104. The member 100 is also comprised of a second arm 77 which connects to the second rail flange 67 and the horizontal member 104. Additionally, the member 100 comprises a central body 75 which is integrally connected to the second arm 77 and the first arm 73. The first arm 73, second arm 77 and central body 75 are one continuous piece, preferably of plastic.

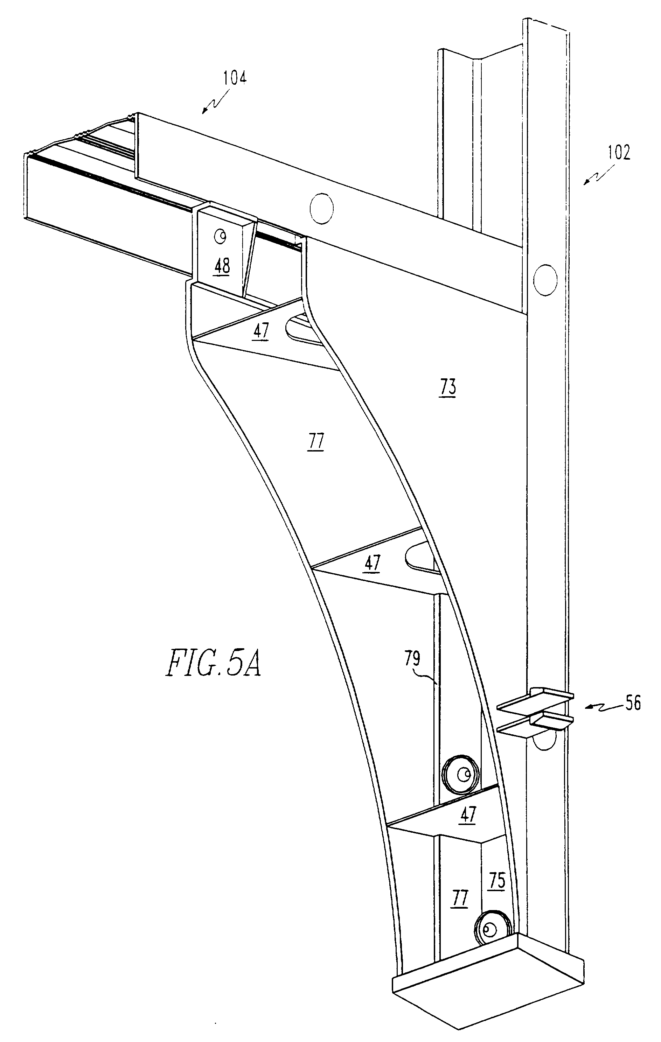

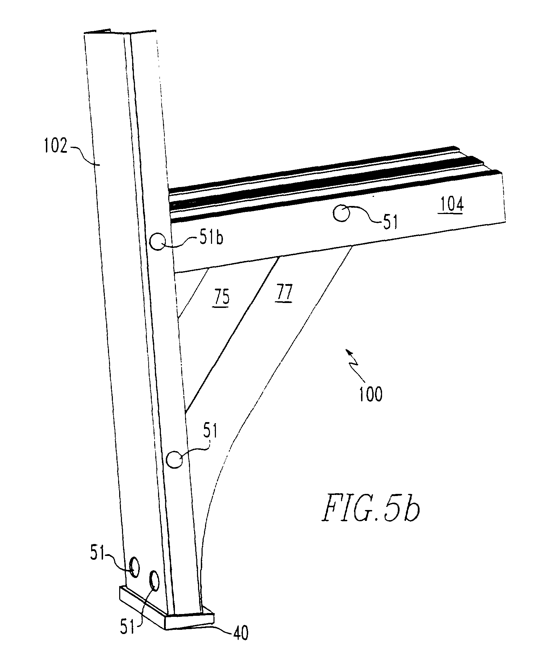

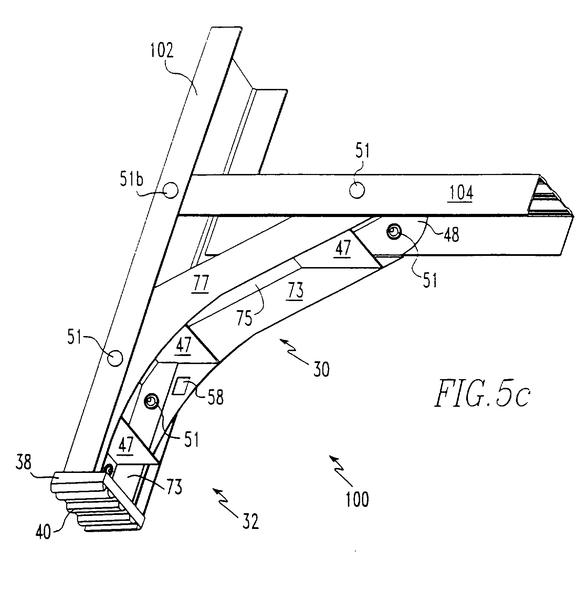

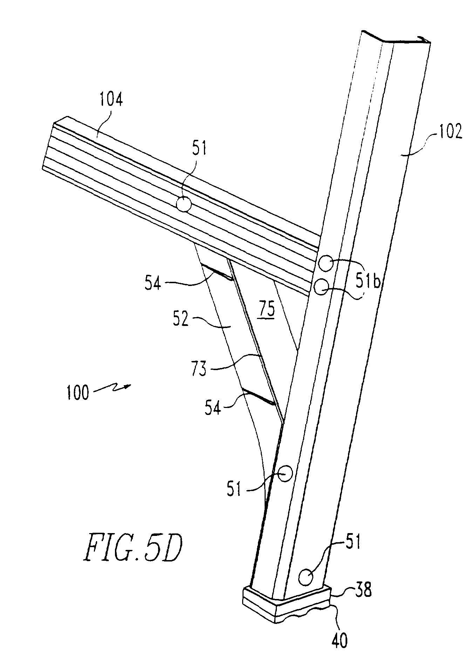

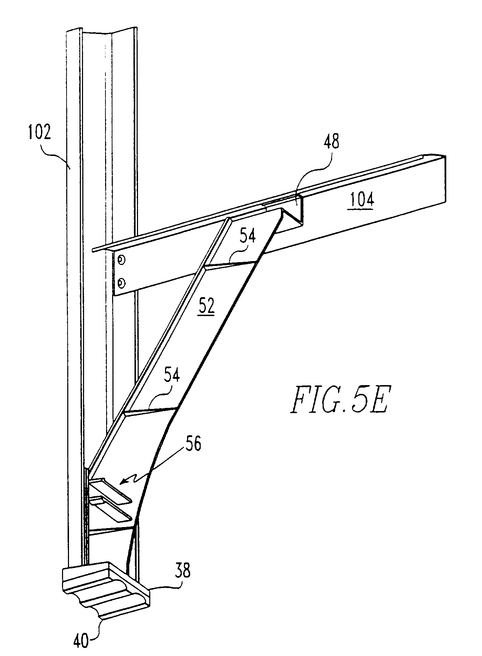

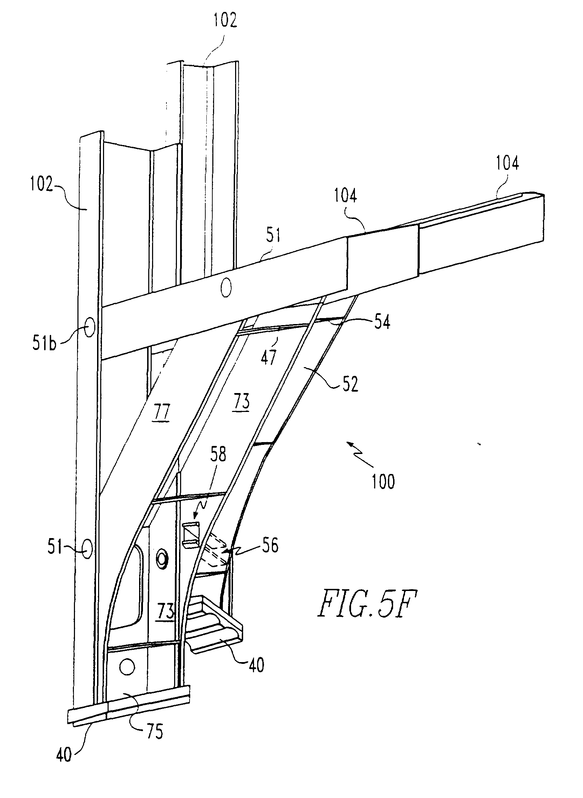

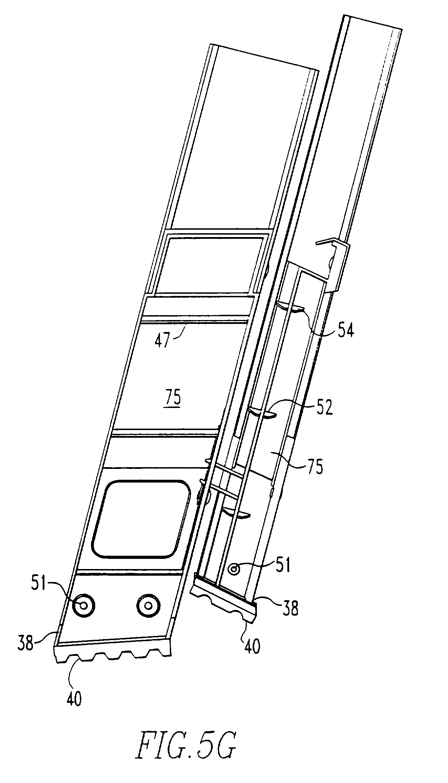

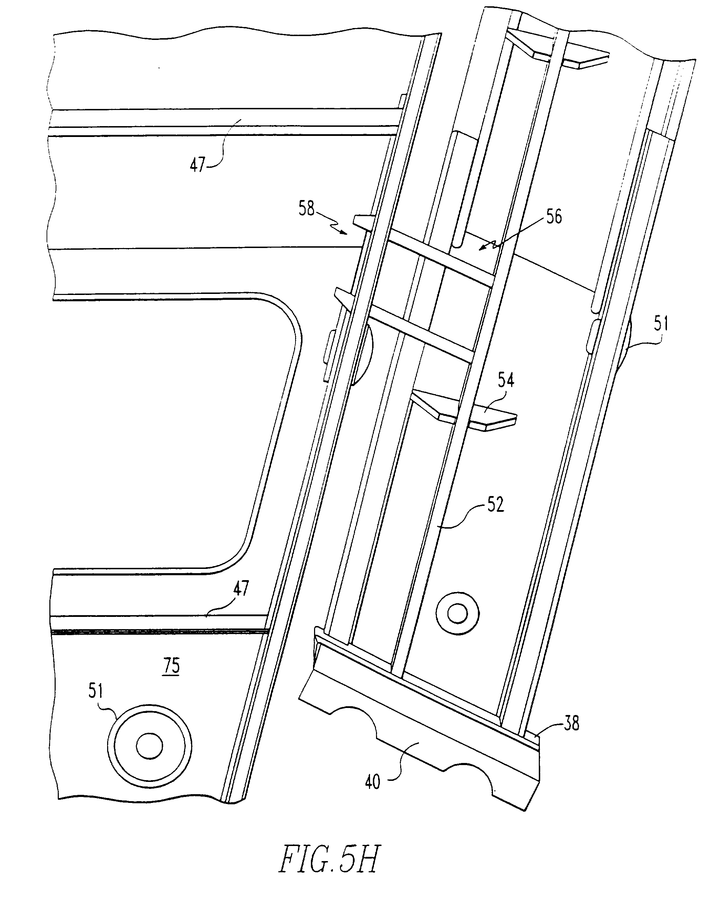

In yet another embodiment, the member has means or a mechanism for connecting the members together. As shown in figure 5, the member 100 has the means or mechanism for connecting the members together which includes a clip 56 attached to the first portion 30 or second portion 32 which extends therefrom to connect with a clip receiver 58 of an opposing member in a stepladder. The clip 56 in the clip receiver 58 maintains the rails in fixed spatial relationship so they do not damage each other or their joint connection to a ladder top by shifting relative to each other during transport or overextending the joint, respectively, during transport. Alternatively, the clip 56 can extend from a rib 52 of a member 100 to be used on a rear section 74 of a ladder 10, as shown in figures 5d and 5e. The clip receiver 58 is then disposed in the first wall 73 of a member 100 to be used on a front section 64 of a ladder 100, as shown in figures 5b and 5c. The clip 56 in connection with the clip receiver 58 is shown in figures 5f-5h. The clip 56 and clip receiver 58 can also be tabs, velcro, etc., which maintain the rear rail with the associated front rail in fixed spatial relationship.

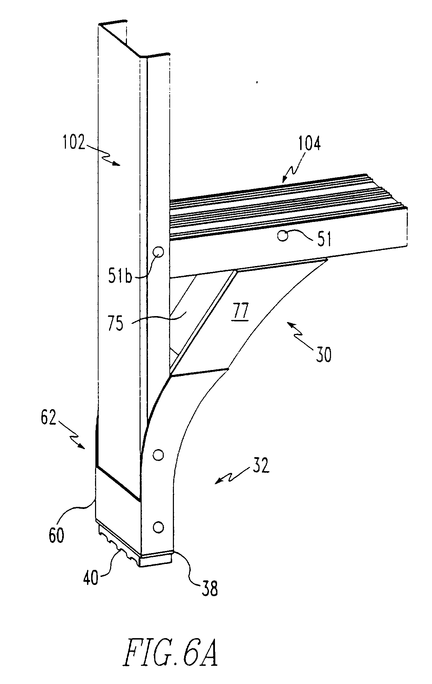

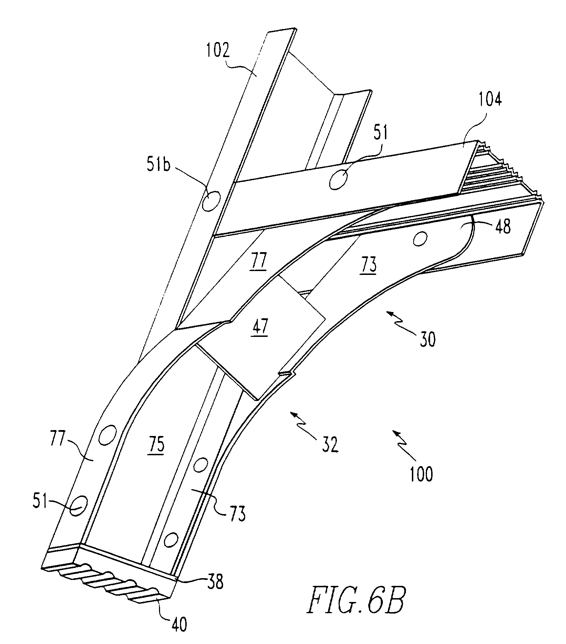

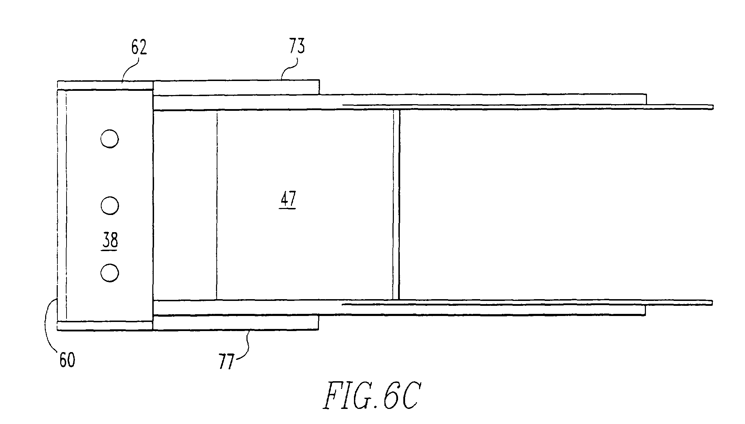

In still another embodiment as shown in figures 6a and 6b, the second portion 32 includes a guard section 60 that is positioned about the rail 102 to which the second portion 32 is attached to protect the same. Preferably, the guard section 60 extends from the contact surface 44 and defines a pocket 62 therewith to receive the bottom 18 of the rail 102. Figure 6c shows an overhead view of this embodiment of the member 100.

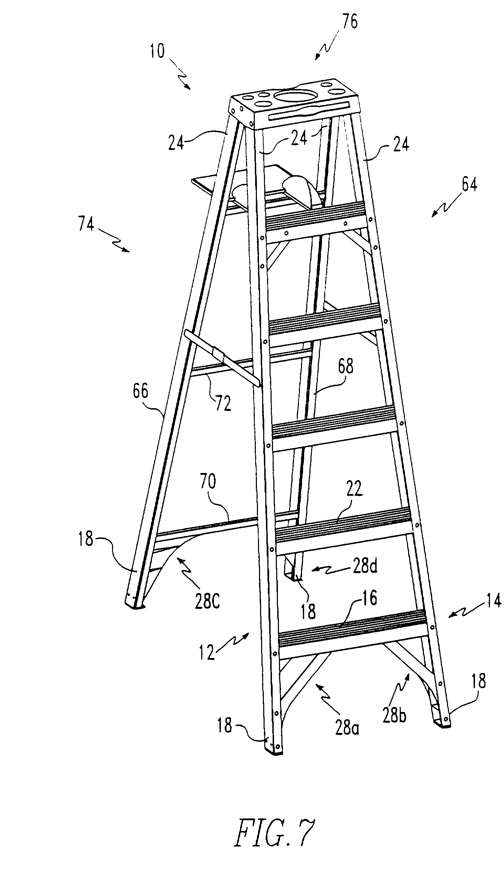

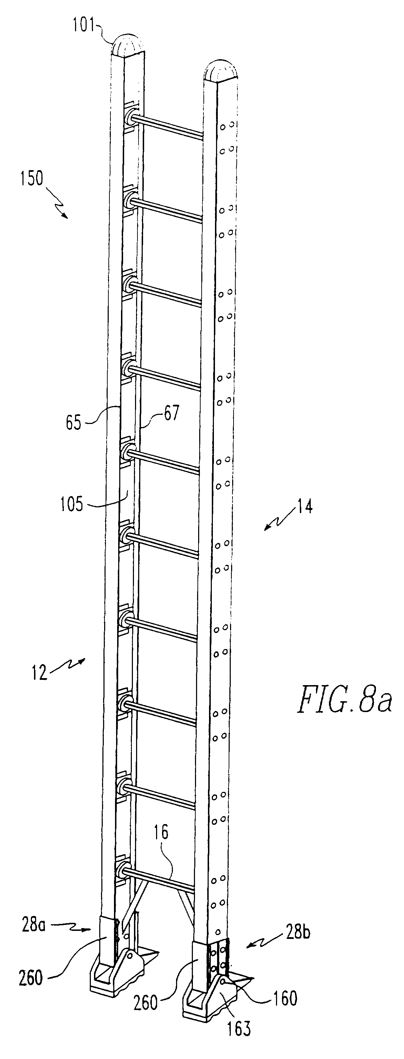

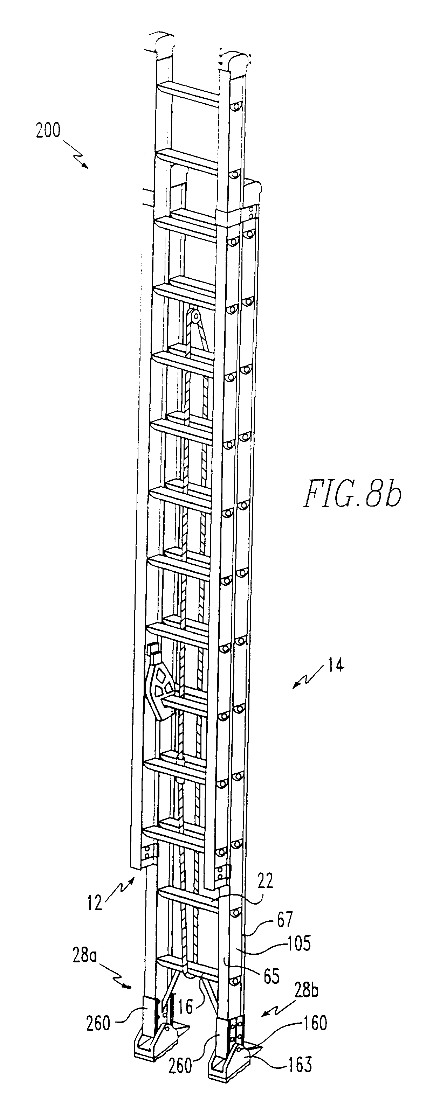

The present invention also pertains to a ladder 10, such as a straight ladder 150 or an extension ladder 200, as shown in figures 8a and 8b, respectively, which is representative of a nonsupporting ladder or a stepladder, as shown in figure 7. The ladder 10 can be made of wood, plastic, fiberglass, aluminum or any material commonly used in the industry, or combinations thereof. The ladder 10 comprises a first side rail 12. The ladder 10 also comprises a second side rail 14 essentially in parallel with and adjacent to the first side rail 12. The ladder 10 also comprises a first step 16 connected to the first side rail 12 in proximity to the bottom 18 of the first side rail and connected to the second side rail 14 in proximity to the bottom 18 of the second side rail and essentially perpendicular with the first side rail 12 and second side rail 14. Additionally, the ladder 10 preferably comprises at least a second step 22 or a top cap 101 connected to the first side rail 12 and second side rail 14 at a location closer to the top 24 of the first side rail 12 and the top 24 of the second side rail 14 than the first step's 16 location relative to the respective top. There is a first front member 28a which is connected to the first side rail 12 and to the first step 16. There is also a second front member 28b which is connected to the second side rail 14 and to the first step 16. Preferably, the first side rail 12, second side rail 14, first step 16, second step 22, first member 28a, second member 28b define a front section 64. The first member 28a and second member 28b preferably are of a configuration as described above and shown in figures 2-2f. Each member preferably has a plurality of apparatuses 111 for holding a washer 120, as described below, so a rivet 51 can be more safely inserted between the desired part of the ladder 10 and the corresponding washer 120 in the apparatus 111 for holding a washer 120 of the corresponding member 28.

The present invention pertains to a method for connecting a member 100 to a ladder 10. The method comprises the steps of inserting a washer 120 into a first apparatus 101 for holding a washer of the member 100. Then there is the step of placing the member 100 in contact with the ladder 10. Next there is the step of riveting the member 100 to the ladder 10 with a rivet 51 which passes through the ladder 10 and the washer 120 in the first apparatus 101 for holding a washer of the member 100.

The placing step preferably includes the step of placing a first portion 30 of the member 100 having a washer 120 in a second apparatus 103 for holding a washer in contact with a horizontal element 104 of the ladder 10. The riveting step preferably includes the step of riveting the first portion 30 of the member 100 to the horizontal element 104 with a rivet 51 which passes through the horizontal element 104 and the washer 120 in the second apparatus 103 for holding a washer of the first portion 30. The placing step preferably also includes the step of placing a second portion 32 of the member 100 having the first apparatus 101 for holding a washer in contact with a rail 102 of the ladder 10. After the step of riveting the first portion 30, preferably there is the step of riveting the second portion 32 of the member 100 to the rail 102 with a rivet 51 which passes through the rail 102 and the washer 120 in the first apparatus 101 for holding a washer of the second portion 32.

The ladder 10 preferably also includes a third side rail 66. There can also be a fourth side rail 68 essentially in parallel with and adjacent to the third side rail 66. The ladder 10 also can include a first horizontal 70 connected to the third side rail 66 in proximity to its bottom 18 and connected to the fourth side rail 68 in proximity to its bottom 18. There can be at least a second horizontal 72 connected to the third and fourth side rails at a location closer to the top 24 of the third side rail 66 and the top 24 of the fourth side rail 68 then the first horizontal's 70 location relative to the respective tops.

Additionally, the ladder 10 can comprise a first rear member 28c connected to the third rail 66 and to the first horizontal 70. Moreover, the ladder 10 can comprise a second rear member 28d connected to the fourth side rail 68 and to the first horizontal 70. The third rail 66, fourth rail 68, first horizontal 70, second horizontal 72, first rear member 28c and second rear member 28d define a rear section 74 The first member 28c and second member 28d preferably are of a configuration as described above and shown in figures 3-3h.

Furthermore, the ladder 10 can comprise a ladder top 76 to which the top 24 of the first rail 12, the top 24 of the second rail 14, the top 24 of the third rail 66 and the top 24 of the fourth rail 68 are connected, as is well known in the art. Preferably, the ladder top 76, front section 64 and rear section 74 form a stepladder.

In the operation of the preferred embodiment, a ladder 10, as shown in figure 7, has a front section 64 comprised of a first side rail 12, a second side rail 14, at least a first step 16, a first front member 28a and a second front member 28b connecting the first step 16 to the first side rail 12 and second side rail 14, respectively. The first front member 28a and second front member 28b each have a first portion 30 and a second portion 32. The first portion 30 is connected to the first step 16 of the ladder 10 at a flange portion 48 at a first end 49 of the first portion 30. The second portion 32 of the first front member 28a is connected to the first side rail 12, and the second portion 32 of the second front member 28b is connected to the side rail 14 of the ladder 10. The second portion 32 is also integrally connected to the first portion 30 at the first end 34 of the second portion 32 and to a foot 38 at a second end 36 of the second portion 32.

The second portion 32 has a channel 81 with a contact surface 44 defined by its first arm 73, central body 75 to which the first arm is integrally connected, second arm 77 to which the central body 75 is integrally connected at the end 76 opposite the end 78 the first arm 73 is connected to the central body 75 and the second portion flanges 79, as shown in figure 2b. In the channel 81, the respective rail fits with and conforms with the contact surface 44 which extends from the first end 34 of the second portion to the foot 38 that is integrally connected to the second portion 32 at the second portion's second end 36. The respective rail rests against the foot 38 during normal operation. On the foot bottom 42 is a foot pad 40 for gripping the ground when the ladder is in use. The first portion 30 and second portion 32 of each front member 28a, 28b is comprised of cross plates 47 disposed at predetermined positions. The cross plates 47 connect to the first arm 73, central body 75 and second arm 77, as shown in figure 2d. These cross plates 47 provide support to the first arm 73, central body 75 and second arm 77 so they do not collapse or fold in when loads they are rated for are placed on them. The cross plates 47 are essentially in place of a solid rectangular shaped cross section with a reduction in weight relative to the weight associated with a solid rectangular shaped cross section.

By the first front member 28a and second front member 28b being comprised of one continuous piece of plastic, it saves time in assembly since only one piece has to be connected to the respective rail and step 16. The presence of the second portion 32 having the contact surface 44 extending from its first end 34 to the foot 38 also provides additional support in regard to forces on the ladder 10 than would otherwise be present if a traditional knee brace only was present connecting the respective rail to the step 16. Forces which are transmitted to the first portion 30 from the rail are in turn transmitted to the second portion and consequently distributed throughout the contact surface 44. Since the contact surface 44 is in contact with the rail, the force being transmitted through the contact surface 44 causes the contact surface 44 to push against the rail. The force is thus transmitted to the rail over essentially the entire contact surface 44 which effectively dissipates the force because it is no longer concentrated at any one localized area. This can be seen, for instance, when a cantilever force is applied to the second portion 32. The force is distributed through the contact surface 44, causing the first arm 73, contact body 75 and second arm 77 to transmit the forces along their length to the rail rather than being focused essentially at the point where the rivet 51 contacts the respective rail. For instance, a horizontal force arising from a user placing his foot in a somewhat horizontal direction relative to the ground onto the corner of the step 16 has the force thereon transferred to the step 16 on which the foot is placed. In turn, this force is transmitted to the rail 12 through the rivet 51b, as shown in figure 1, that connects the step 16 to the rail 12. Additionally, force on the step 16 is transferred by the first portion 30 connected with the step 16 to the second portion 32 which is connected also to the rail 12 through rivets 51 and along the contact surface 44. This force is applied to the rail 12 through the first arm 73 and central body 75 which push against the rail 12. Since this force is in the form of a twisting force, the second arm 77 also pushes against the inside portion of the rail 12 to which it contacts. This is because the second arm 77 also experiences the twisting force which tends to attempt to drive it out and away from the rail. However, due to the fact that it conforms with the rail, it instead transfers the force to the rail, rather than twisting out of the rail. In short, due to the length of the second portion 32, a force is dissipated by being distributed over a larger surface area than if there was only a rivet 51 connecting the first portion 30 from the step 16 to the rail 12.

Similarly, a cantilever force applied to the bottom 18 of the first side rail is distributed to the contact surface 44, through the first portion 30 to the step 16. The presence of the second portion 32 extending along the rail through its contact surface 44 thus dissipates the force that would otherwise be mostly absorbed by the rail or concentrated at a rivet 51 if there was no second portion 32 present. Essentially, this same explanation of dissipation of forces is present whether the force arises from a user placing his foot on the first step 16 or a second step 22 that is higher off of the ground, whether the force arises from a user shifting his weight while standing off-center on a step or an external cantilever force is applied to the rail during transportation, such as when it is put in or taken out of a truck, or dropped.

In regard to the first rear member 28c and second rear member 28d, they are connected to the third rail 66 and fourth rail 68, respectively, and to the first horizontal 70 of the rear section 74 of the stepladder 10. Each rear member has a contact surface 44 and a channel 81 as described above in regard to the front members. The important difference, however, is that the first arm 73 of the rear member is shorter than the second arm 77 of the rear member due to the fact that the side rails of the rear section 74 are of essentially this same cross sectional configuration and require the same configuration of the rear members 28c, 28d so they can conform with and contact the rear side rails.

There is a rib 52 which extends from the central body 75 offset from the central body's center 86 which is closer to the first arm 73 than to the second arm 77, as shown in figure 3h. The rib 52 extends from the foot 38 to the flange 48 of the first portion 30. The first portion 30 has a first arm 73 connected to a central body 75, and a second arm 77 also connected to the central body 75 at its end 76 opposite the end 78 the first arm 73 is connected to the central body 75, as shown in figures 3a and 3g. The first arm 73 and the second arm 77 in the first portion 30 extends only a small distance relative to the first arm 73 of the second portion 32 to minimize weight in regard to the loads it is required to withstand. The first portion extends at an angle of 42° from the second portion 32. The rib 52 has struts 54 at predetermined locations that support the rib 52 against bending. The rib 52 supports the central body 75 from bending. The first portion 30 of each rear member is connected to the first horizontal 70 through its flange 48 that extends from the first arm 73.

When a cantilever force is applied to the bottom 18 of a rail on the rear section 74, the force is distributed from the rail to the contact surface 44 of the second portion 32. The first arm 73, the central body 75 and the second arm 77 which define the contact surface 44 of the second portion 32 transfers forces either from the rail or to the rail in which they are in contact depending on the direction from where the force arises. Such force is dissipated by it being spread out over the contact surface 44 as opposed to it being localized at a rivet 51 of a normal shaped knee brace that extends essentially only from the rivet 51 on a rail to a horizontal. The forces transmitted to the contact surface 44 from the rail are in turn transferred to the rib 52 and the central body 75, the first arm 73 and the second arm 77 of the first portion 30. The flange 48 connected to the first arm 73 and central body 75 and rib 52 in turn transfers this force to the first horizontal 70. A twisting force transferred through the first portion does not cause the first portion 30 to fail because of the rib 52, which effectively expands the profile of the first portion to better resist twisting or bending forces, but again with minimum weight. The struts 54 serve to support the rib 52 to further strength it against bending or twisting forces. When forces are transmitted through the rear member from the first horizontal 70 to the respective rail, reaction of the rear member is the same except in reverse order. The presence of the second portion 32 allows the force from the horizontal 70 to be diffused along the rail from the contact surface 44 instead of just in the localized area about the rivet hole 83 where the first horizontal 70 is attached to the respective rail or the rivet 51, as described above in regard to the front members with the rails on the front section 64.

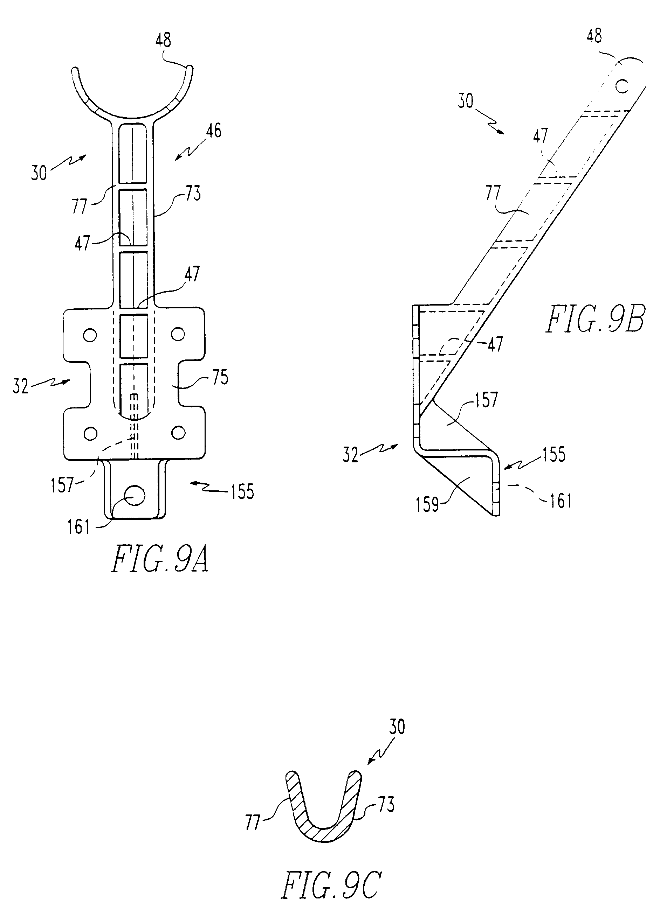

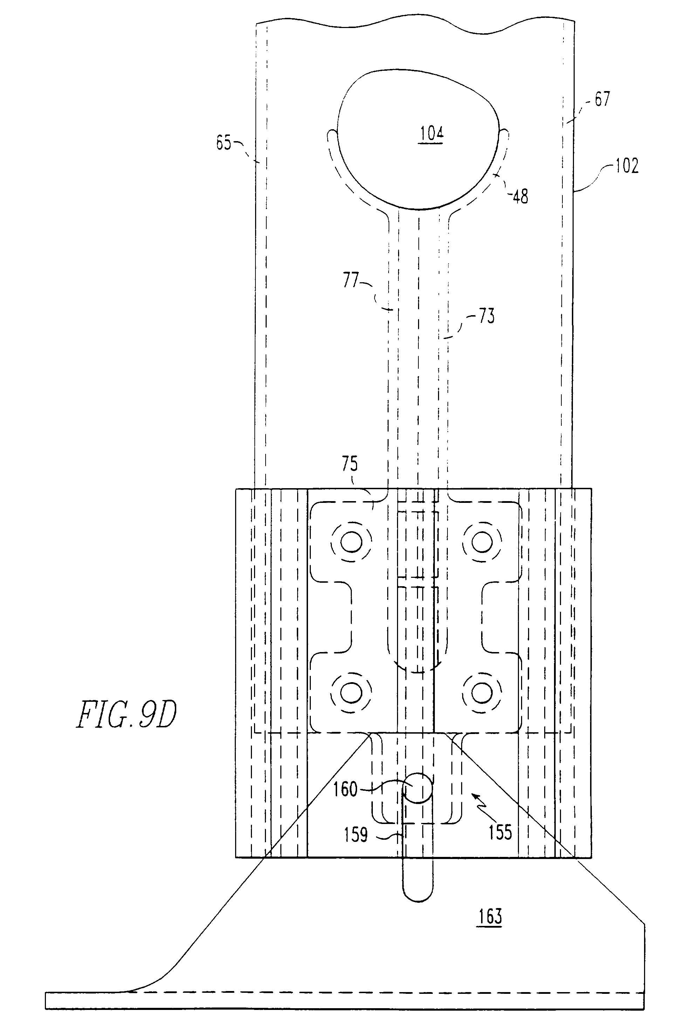

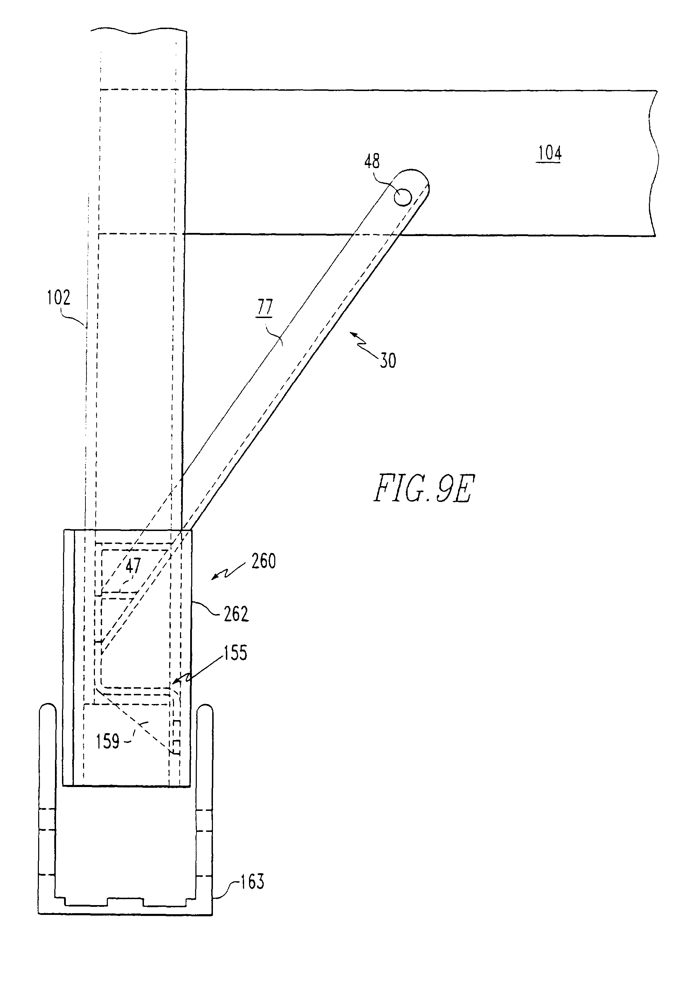

As shown in figures 9a, 9b, 9c, 9d and 9e, another embodiment of a member 100 can be used on a nonsupporting ladder such as an extension ladder or straight ladder. In this embodiment, the member 100 has a first portion 30 which preferably has a V-shaped cross section, as shown in figure 9c. The first portion 30 has a first arm 73 and a second arm 77 integrally connected to and in angular relationship with the first arm 73. The first portion 30 preferably has buttressing 46. The buttressing 46 can comprise cross plates 47 to support the first arm 73 and second arm 77. The first portion 30 is also preferably comprised of a flange 48 through which the first portion 30 is attached to the horizontal element 104. For instance, a rivet 51 can be used to connect the flange 48 to the horizontal element 104.

The first portion 30 is integrally connected to a second portion 32 at an angle of 20-60° and preferably 32°. The second portion 32 is comprised of a central body 75 to which the first arm 73 and second arm 77 are integrally connected and from which they extend. The central body 75 connects to the rail 102 of the nonsupporting ladder through, for instance, rivets 51. The second portion 32 also preferably has a shoe attachment portion 155 that is integrally connected to and extends from the central body 75. The first portion 30 preferably also has a top rib 157 which is integrally connected to and extends from the central body and the first portion 30 to the shoe attachment portion 155. There is a bottom rib 159 which is integrally connected to and extends from the central body 75 to the shoe attachment portion 155 on the opposing side the top rib 157 is connected to it. Preferably, the rib 159 is offset relative to the rib 157, as shown in figure 9a. The shoe attachment portion 155 has a hole 161 through which bolt 160 connects a ladder shoe 163 to the rail 102. Of course, the member 100 need not have the shoe attachment portion 155 and the ribs 157, 159.

As shown in figure 8a, in regard to a straight ladder 150, and figure 8b in regard to an extension ladder 200, a first rail member 28e and a second rail member 28f are used to provide further support. The first rail member 28e and second rail member 28f are preferably of a configuration as described above and shown in figures 9a-9e. The first rail member 28e and the second rail member 28f are connected to the first step 16 and first rail 12 and second rail 14, respectively. The straight ladder 150 and the extension ladder 200 have rail guards 260 that are attached to the bottom 18 of rails 12, 14 and positioned about the outside of the rails 12, 14. The rail guards 260 fit about and grab the first rail flange 65 and second rail flange 67, as shown in figure 9d. The shoe attachment portion 155 extends from the central body 75 attached to the central flange 105 of the rails to essentially the outside edge 262 of the rail guard 260 to be flush and even with it. The shoe 163 aligns with the shoe attachment portion 155 so a bolt 160 fits through the hole 161 of the shoe attachment portion 155 and a hole in the central flange 105 of the rail 12, 14 and is attached to the respective rail 12, 14 as is well known in the art. See, for instance, U.S. Patent No. 5,154,255, incorporated by reference. It should be noted that all embodiments described herein of the member 100 are produced by standard injection molding techniques.

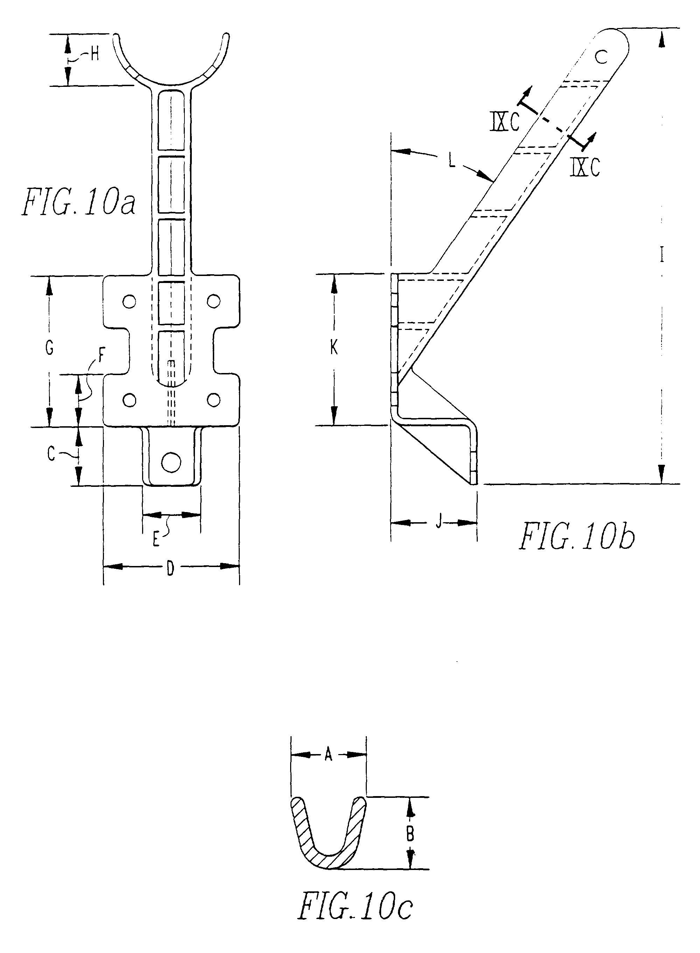

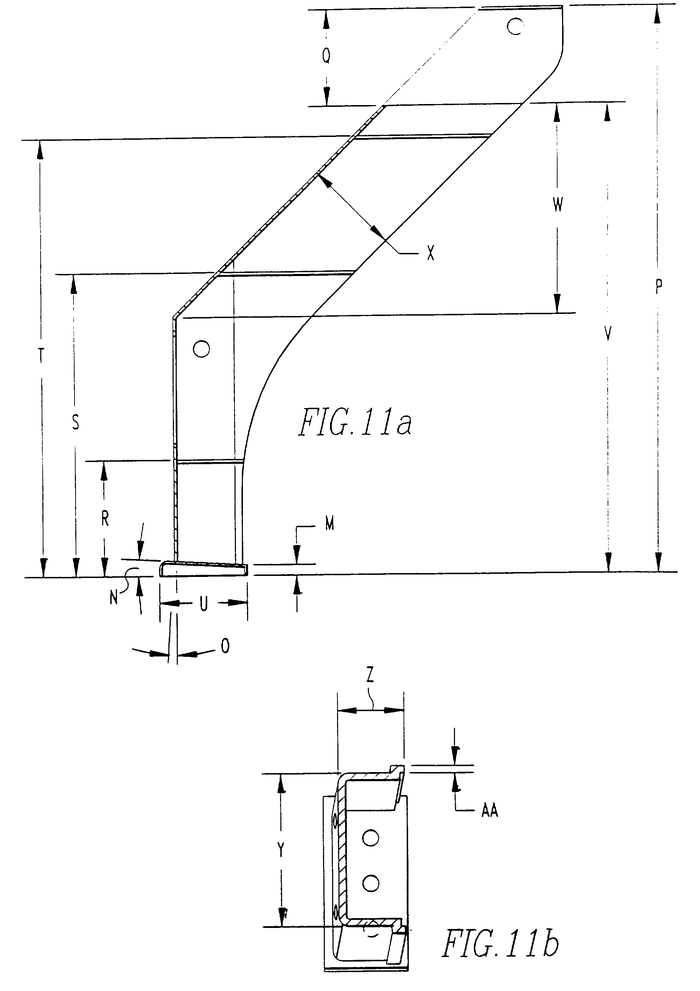

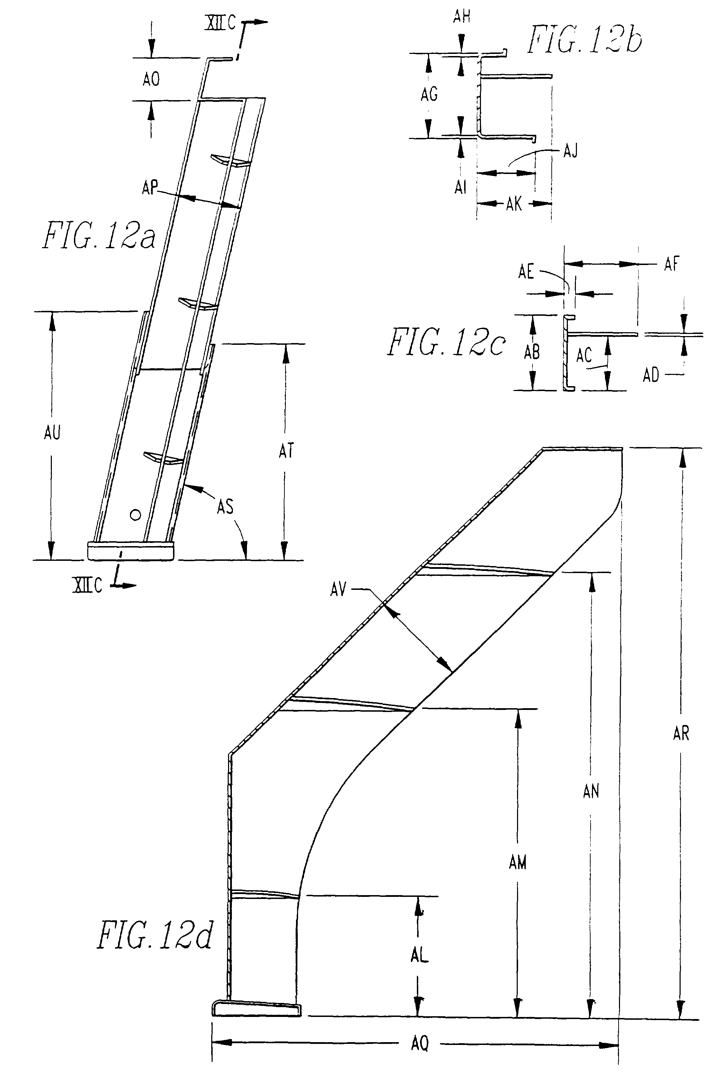

As representative of one embodiment of many possible embodiments whose dimensions and configurations are dictated by the application; the dimensions of a member for a nonsupporting ladder (figures 10a, 10b and 10c), a member for a front section of a stepladder (figures 11a and 11b), and a member for a rear section of a stepladder (figures 12a, 12b, 12c and 12d) are given in the following table.

**TABLE**

| | | | | | |
|---|---|---|---|---|---|
| A | .625 inches | Q | 1.450 | AG | 1.70 |
| B | .625 | R | 2.25 | AH | .186 |
| C | .969 | S | 6.0 | AI | .191 |
| D | 2.188 | T | 9.25 | AJ | 1.117 |
| E | .95 | U | 3.304 | AK | 1.681 |
| F | .813 | V | 9.5 | AL | 2.311 |
| G | 2.313 | W | 4.5 | AM | 5.134 |
| H | .66 | X | 1.750 | AN | 7.888 |
| I | 7.067 | Y | 2.910 | AO | .869 |
| J | 1.212 | Z | 1.050 | AP | 1.322 |
| K | 2.313 | AA | .120 | AQ | 8.019 |
| L | 32° | AB | 1.322 | AR | 9.779 |
| M | .250 | AC | .852 | AS | 77° |
| N | 3.567° | AD | .9 | AT | 4.227 |
| O | 3.567° | AE | .188 | AU | 4.489 |
| P | 10.972 | AF | 1.750 | AV | 1.750 |

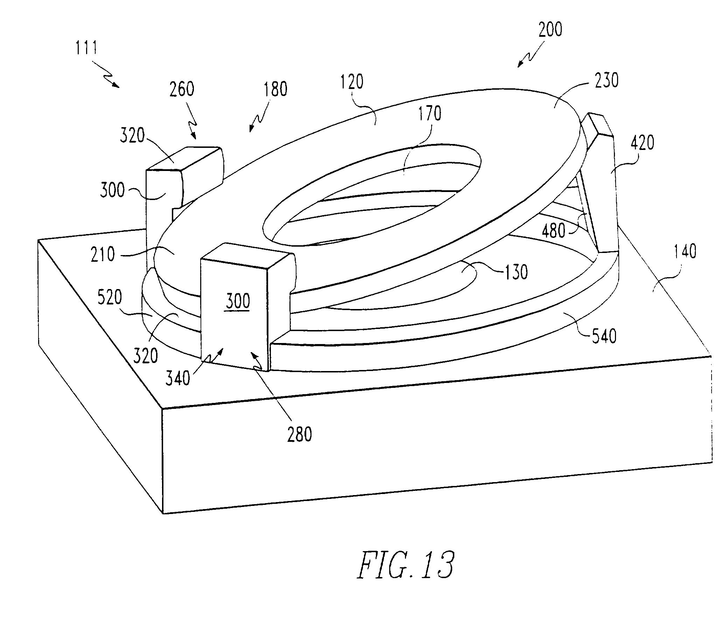

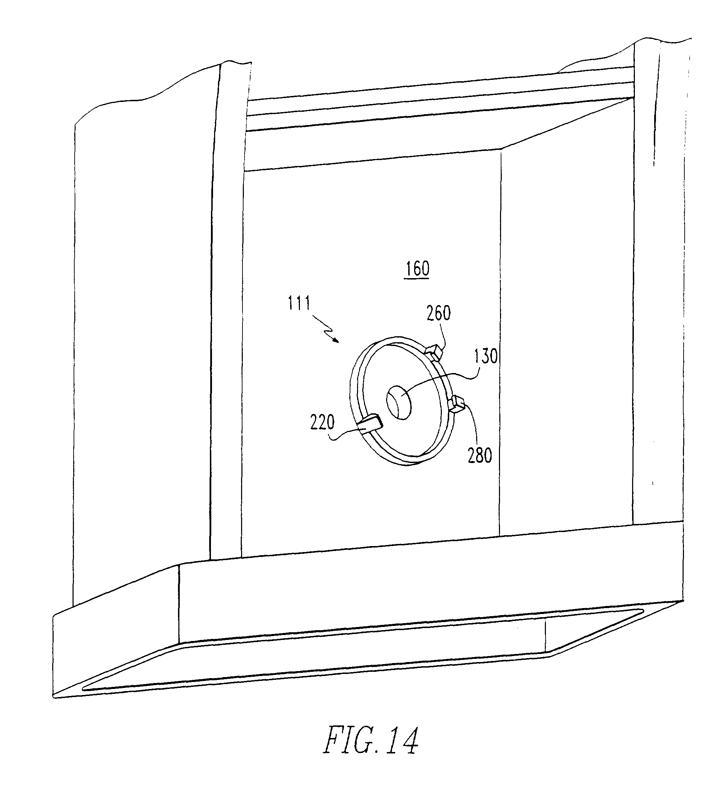

Referring now to figures 13-21B, there is shown an apparatus 111 for holding a washer 120. The apparatus 111 comprises a backing 140 having a backing surface 160. The apparatus 111 also comprises a retainer 180 extending from the backing 140. The retainer 180 holds the washer 120. The retainer 180 has a front 200 through which the washer 120 is introduced into the retainer 180. Preferably, the retainer 180 and the backing 140 define a slot 240 in which the washer 120 is held between the backing surface 160 of the backing 140 and the retainer 180.

Additionally, the apparatus 111 comprises a stop 220 extending from the backing. The stop 220 is disposed adjacent to the front 200 of the retainer 180 and prevents the washer 120 from coming out of the retainer 180 when the washer 120 is in the retainer 180. The stop 220 is preferably disposed adjacent to the front 200 of the retainer 180 such that the washer 120 is able to slide past the stop 220 into the retainer 180.

The retainer 180 preferably comprises a first prong 260 disposed adjacent the stop 220. The retainer 180 also comprises at least a second prong 280 disposed adjacent the stop 220 and the first prong 260. Each prong is preferably comprised of a shaft 300 having a top 320 and a bottom 340. The shaft 300 extends from the backing surface 160 at the shaft's bottom 340. Each prong is also comprised of a flange 360. The flange 360 is connected to the shaft 300 and the top 320 of the shaft 300. The flange 360 is in angular relationship with the shaft 300. The flange 360 extends in a direction toward a center 380 defined between the first prong 260, the second prong 280 and the stop 220. Preferably, each shaft 300 extends essentially perpendicular from the backing surface 160, and the flange 360 extends essentially at a perpendicular angle from the top 320 of the shaft 300. Each flange 360 preferably extends a distance from the top 320 of the shaft 300 which is at least enough to cover over at least a portion of the washer 120 when the washer 120 is on the retainer 180.

In one embodiment, the stop 220, the first prong 260 and second prong 280 are disposed essentially equidistantly from each other and define a circle 400 in which the washer 120 is held. The stop 220 is preferably comprised of a post 420 having a top 44 and a bottom 460 that extends from the backing surface 160 at its bottom 26. The post 420 has a first side 480 with a tip 500. The first side 480 angles from the bottom 460 of the post 420 toward the center 380 when the post 420 is in a stable position. The post 420 is bent away from the center 380 by the washer 120 as the washer 120 is slid past the post 420 into the retainer 180 and then restores itself to its stable position. The tip 500 of the post 420 covers over at least a portion of the washer 120 when the washer 120 is in the retainer 180. The post 420 has a second side 520 that is connected to the first side 480 at the tip 500. The second side 520 extends at an angle away from the center 380 from the tip 500 to the top 44 of the post 420 such that when the washer 120 is slid past the post 22, the washer 120 slides along the second side 520 and pushes against the second side 520 causing the post 22 to bend away from the center 380.

The retainer 180 preferably includes a first wall 54 which extends from the backing surface 160 and between the first prong 260 and the stop 220. The retainer 180 also includes a second wall 540 which extends from the backing surface 160 and between the first prong 260 and the second prong 280. Additionally, the retainer 180 includes a third wall 560 which extends from the backing surface 160 and between the second prong 280 and the stop 220. The first, second and third walls are disposed about the circle 400.

In an alternative embodiment, as shown in figures 21-27C-C, the retainer 180 is comprised of three prongs. The third prong 580 is disposed adjacent the first and second prongs and opposing the stop 220. Preferably, the first prong 260 opposes the second prong 280. The backing 140 preferably has an edge 600 which extends from the backing surface 160. Each shaft and flange extends from the edge 600. Preferably, the stop 220 is comprised of a nub 620.

The present invention pertains to a method for holding a washer 120. The method comprises the steps of positioning the washer 120 at a front 200 of a retainer 180. Then there is the step of moving the washer 120 past a stop 220 adjacent the front 200 of the retainer 180. Next there is the step of seating the washer 120 in the retainer 180, with the stop 220 preventing the washer 120 from coming out of the retainer 180.

The seating step preferably includes the step of inserting the washer 120 into a slot 240 of the retainer 180. Preferably, the inserting step includes the step of placing the washer 120 between a first prong 260 and a second prong 280 of the retainer 180. The moving step preferably includes the step of sliding the washer 120 past the stop 220.

In the operation of one embodiment of the invention, as shown in figures 13-21B, a washer 120 is positioned over an apparatus 111 for holding a washer 120. An edge 210 of the washer 120 is angled toward the backing surface 160, and the washer 120 is moved into a position at the front 200 of the retainer 180. The edge 210 of the washer 120 is then moved into the slot 240 defined by the backing surface 160; the shaft 300, which extends from the backing surface 160 at the shaft's bottom 340; and the flange 360 that extends essentially perpendicular from the top 320 of the shaft 300 of the first prong 260 and the second prong 280. To further support the edge 210 of the washer 120 positioned in the slot 240, there is a second wall 540 which extends from the backing surface 160 and between the first prong 260 and the second prong 280. The edge 210 of the washer 120 abuts the second wall 540 when it is angled into the slot 240. The opposing edge 230 of the washer 120 to the edge 210 in the slot 240 is disposed above the second side 520 of a post 420 of the stop 220 at this point of the insertion process. The stop 220, first prong 260 and second prong 280 defines a circle 400.

Force is then applied to the washer 120, causing the opposing edge 230 of the washer 120 to push against the second side 520 of the post 420 and slide along the second side 520 as the post 420 bends away from the washer 120 under the force of the washer 120. The post 420 continues to bend away from the washer 120 as the washer moves downward toward the backing surface 160 under the continued application of force. At the point the opposing edge 230 of the washer 120 has slid relative to the second side 520 to the tip 500, the post 420 has bent enough to allow the opposing edge 230 of the washer 120 to clear the tip 500. The opposing edge 230 of the washer 120 then moves down to the backing surface 160 since there is no longer anything in its way. The post 420, having no further force applied to it from the washer 120, returns to its stable position.

The first side 480 of the post 420 angles from the bottom 460 of the post 420 toward the center 380 when the post 420 is in a stable position. The tip 500 of the post 420 is located at the top end of the first side 480. The post 420, when it is in the stable position, has the tip 500 covering over at least a portion of the washer 120 when the washer 120 is in the retainer 180.

Further containing the washer 120, is a first wall 52 which extends from the backing surface 160 and between the first prong 260 and the stop 220. Additionally, there is a third wall 560 which extends from the backing surface 160 and between the second prong 280 and the stop 220. The first, second and third walls; the first and second prongs with their shaft 300, and the post 420 of the stop 220 all serve to prevent the washer 120 from moving in a direction parallel to the backing surface 160 and out of the apparatus 111. The flange 360 of the first prong 260 and second prong 280, and the first side 480 of the post 420 which angles toward the center 380 of the backing surface 160, all serve to prevent the washer 120 from moving in a direction perpendicular to the backing surface 160 and out of the apparatus 111. Consequentry, the washer 120 is maintained in a secure, essentially fixed position by the apparatus 111 so the introduction of a rivet 51 through hole 170 of the washer 120 at a desired time is essentially certain.

In the operation of an alternative embodiment of the apparatus 111 for holding a washer 120, as shown in figures 21-27C-C, the retainer 180 comprises a first prong 260 and a second prong 280 which opposes the first prong 260. There is also a third prong 580 disposed adjacent to the first and second prongs and between them. The backing 140 has an edge 600 which extends from the backing surface 160. Each shaft 300 and flange 360 of the first, second and third prongs extends from the edge 600 and from the backing surface 160. Each shaft 300 and flange 360 of each prong extends essentially parallel with the other shafts and flanges.

At the front 200 of the retainer 180 is positioned the stop 220. The stop 220 comprises a nub 620 which is hemispherical in shape and extends from the backing surface 160. The center diameter 63 of the nub 620 aligns with the shaft 300 of the third prong 580 and is equidistant from the shaft 300 of the first prong 260 and the shaft 300 of the second prong 280.

The placement of a washer 120 into the apparatus 111 begins with moving the washer 120 into a position at the front 200 of the retainer 180. The edge 210 of the washer 120 closest to the front 200 is angled downward toward the backing surface 160 so the edge 210 of the washer 120 clears the nub 620 and is at a level to enter the slot 240 while the remainder of the washer is above the nub 620. The slot 240 is defined by the flange 360 and shaft 300 of each prong and the backing surface 160.

The washer 120, which is at an angle relative to the backing surface 160, moves into the slot 240 as it slides over the nub 620. As the trailing edge 230 of the washer 120 clears the nub 620, the washer 120 becomes essentially parallel with the backing surface 160. At this point, the washer is between the flange 360 of each prong and the backing surface 160.

The location of the shaft 300 of the third prong 580 and the edge of the nub 620 closest to the front 200 of the retainer 180 centers the washer 120 in a first direction so the hole 130 of the washer 120 aligns with the hole 170 of the backing 140 and a rivet 51 can be inserted through both of them. Similarly, the shaft 300 of the first prong 260 and the second prong 280 are located so as to cause the washer 120 to be aligned with the hole 170 of the backing 140 so a rivet 51 can be inserted into the hole 170 of the backing 140 and the hole 130 of the washer 120.

The shaft 300 of the first and second prongs prevent the washer 120 from moving out of the apparatus 111 in a second direction parallel to the backing surface 160. The nub 620 and the shaft 300 of the third prong 580 prevent the washer 120 from moving out of the apparatus 111 in the first direction parallel to the backing surface 160. Additionally, the position of the third prong 580 and the nub 620 relative to the first and second prongs prevents the washer 120 from moving out of the apparatus 111 through the spaces between the nub 620 or the third prong 580 and the first and second prongs, respectively, in a direction parallel to the backing surface 160.

The flange 360 of the first, second and third prongs prevent the washer 120 from moving out of the apparatus 111 in a direction perpendicular to the backing surface 160. Furthermore, the presence of the nub 620 prevents the washer 120 from moving in a direction parallel to the backing surface 160 to clear the flange 360 of the first, second and third prongs and moving out of the apparatus 111 in a direction perpendicular to the backing surface 160.

The retainer 180 of the apparatus 111 holds the washer 120 in place to receive a rivet 51. The use of the apparatus 111 obviates the need for a person to hold or place a washer 120 over the riveter pin of a riveter. The danger of damage to a person's fingers from the operation of the riveter is eliminated or greatly reduced.

Figure 32 shows generally a rivet 51 in place in a backing 140 holding the washer 120. The washer 120 is held in place by the rivet upset 177. Figure 33 shows the top of the rivet 51 in place on the backing 140 opposite the backing surface 160.

The members, as described above, having any desired number of apparatuses 111 for holding washers 120, can be riveted to the corresponding portions of the ladder 10 in the aforementioned manner.

Although the invention has been described in detail in the foregoing embodiments for the purpose of illustration, it is to be understood that such detail is solely for that purpose and that variations can be made therein by those skilled in the art without departing from the spirit and scope of the invention except as it may be described by the following claims.

## Claims

1. A ladder (10) comprising a pair of essentially vertical rails (102) of U-shaped cross-section, a plurality of horizontal steps (104) and braces (100) for connecting the rails (102) to the steps (104), said braces (100) comprising:
a first portion (30) that connects to the steps (104);
and a second portion (32) which connects to the rail (102), said second portion (32) integrally connected to the first portion (30) such that the first portion and second portion are one continuous piece (100), said second portion (32) being in an angular relationship of less than 90° with said first portion (30),
characterized in that
the ends of the steps (104) are fixedly connected to the rail at a joint (51b), the second portion (32) of the brace (100) terminates at a distance from said joint (51b)
and the second portion (32) of the brace has three contact surfaces (73, 75, 77) which connect to the rail, and extend essentially in parallel with the rail (102) and conforms with the rail (102) to which it is attached so forces can be transferred therebetween, wherein two contact surfaces contact the side faces and one contact surface contacts the web of the rail of U-shaped cross-section.

2. A ladder as described in Claim 1 characterized in that
the brace (100) is of essentially straight configuration, the step (104) has a u-shaped cross-section, the end (48) of the first portion (30) of the brace (100) is formed such that three faces thereof come into contact with the three inner faces of the step (104), and the ends of the brace (100) are fixedly connected to the flanges of the rail (102).

3. A ladder (10) as described in Claim 2 characterized by the fact that the second portion (32) has a first end (34) connected to the first portion (30) and a second end (36) including a foot (38) integrally connected to the second end (36) of the second portion (32) to form one continuous piece therewith, said foot (38) disposed to receive the bottom of the rail (102) so weight on the rail (102) is transferred to the foot (38) or the second portion (32).

4. A ladder (10) as described in Claim 3 characterized by the fact that the first portion (30) second portion (32) and foot (38) are one continuous piece of plastic.

5. A ladder (10) as described in Claim 4 characterized by the fact that the first portion (30) forms an angle θ of 30-60° with the second portion (32).

6. A ladder (10) as described in Claim 5 characterized by a foot pad (40) to contact ground when the rail (102) to which it is attached is in operable position, said pad (40) attached to the bottom (42) of the foot (30).

7. A ladder (10) as described in Claim 6 characterized by the fact that the foot (38) is angled to be disposed flat relative to the ground when the rail (102) to which it is attached is in operable position.

8. A ladder (10) as described in Claim 7 characterized by the fact that the second portion (32) has a contact surface (44) which extends along and conforms with the rail (102) and in which is formed a fixing opening.

9. A ladder (10) as described in Claim 8 characterized by the fact that the first portion (30) and second portion (32) include buttressing (46).

10. A ladder (10) as described in Claim 9 characterized by the fact that the first portion (30) includes a flange portion (48) which connects to the horizontal member (104).

11. A ladder (10) as described in Claim 9 characterized by the fact that the first portion (30) and second portion (32) are C-shaped, and the buttressing (46) includes cross plates (47) disposed in predetermined locations in the C-shape of the first and second portions (30) and (32), respectively, said cross plates (47) forming one continuous piece with the first and second portions (30) and (32), respectively.

12. A ladder (10) as described in Claim 9 characterized by the fact that the first portion (30) and second portion (32) are C-shaped, and the buttressing (46) includes a rib (52) extending along the first and second portions (30) and (32), respectively, and disposed in the C-shape thereof, said rib having struts (54), said rib (52), struts (54) and first and second portions (30) and (32), respectively, being one continuous piece.

13. A ladder (10) as described in Claim 9 characterized by a clip (56) attached to the first portion (30) or the second portion (32) which extends therefrom to connect with a clip receiver (58) of another member (100) attached to another rail (102) when the ladder (10) is closed.

14. A ladder (10) as described in Claim 9 characterized by the fact chat the second portion (32) includes a guard section (60) that is positioned about the rail (102) to which the second portion (32) is attached to protect the rail (102).

15. A ladder (10) as described in Claim 14 characterized by the fact that the guard section (60) extends from the contact surface (44) and defines a pocket (62) therewith to receive the rail (102) bottom (18).

16. A ladder (10) as described in Claim 1 including at least a first apparatus (101) for holding a washer (120).

17. A ladder (10) as described in Claim 16 characterized by the fact that the first portion (30) includes a second apparatus 103 for holding a washer (120).

18. A ladder (10) as described in Claim 17 wherein each apparatus (111) for holding a washer (120) is characterized by:
a backing (140) having a backing surface (160); and
a retainer (180) extending from the backing (140), said retainer 180 holding the washer (120), said retainer (180) having a front (200) through which the washer (120) is introduced into the retainer (180); and
a stop (220) extending from the backing (140), said stop (220) disposed adjacent to the front (200) of the retainer (180) and preventing the washer (120) from coming out of the retainer (180) when the washer (120) is in the retainer (180).

19. An apparatus (111) as described in Claim 18 characterized by the fact that the retainer (180) and the backing (140) define a slot (240) in which the washer (120) is held between the backing surface (160) of the backing (140) and the retainer (180).

20. An apparatus (111) as described in Claim 19 characterized by the fact that the stop (220) is disposed adjacent to the front (200) of the retainer (180) such that the washer (120) is able to slide past the stop (220) into the retainer (180).

21. An apparatus (111) as described in Claim 20 characterized by the fact that the retainer (180) comprises a first prong (260) disposed adjacent the stop (220), and at least a second prong (280) disposed adjacent the stop (220) and the first prong (260).

22. An apparatus (111) as described in Claim 21 characterized by the fact that each prong is comprised of a shaft (300) having a top (320) and a bottom (340), said shaft (300) extending from the backing surface (160) at the shaft's (300) bottom (340); and a flange (360), said flange (360) connected to said shaft (300) and said shaft's top (320), said flange (360) in angular relationship with said shaft (300), said flange (360) extending in a direction towards a center (380) defined between the first prong (260), second prong (280) and stop (220).

23. An apparatus (111) as described in Claim 22 characterized by the fact that each shaft (300) extends essentially perpendicular from the backing surface (160), and the flange (360) extends essentially perpendicularly from the top (320) of the shaft (300).

24. An apparatus 111 as described in Claim (23) characterized by the fact that each flange (360) extends a distance from the top (320) of the shaft (300) which is at least enough to cover over at least a portion of the washer (120) when the washer (120) is on the retainer (180).

25. An apparatus as described in Claim 24 wherein the stop (220), first prong (260) and second prong (280) are disposed essentially equidistant from each other and define a circle (400) in which the washer (120) is held.

26. An apparatus (111) as described in Claim 25 characterized by the fact that the stop (220) is comprised of a post (420) having a top (440) and a bottom (400) that extends from the backing surface (160) at its bottom (400), said post (420) having a first side (480) with a tip (500), said first side (480) angles from the post's (420) bottom (400) toward the center (380) when the post (420) is in a stable position, said post (420) being bent away from the center (380) by the washer (120) as the washer (120) is slid past the post (420) into the retainer (180) and then restoring itself to its stable position, said tip (500) of said first side (480) covering over at least a portion of the washer (120) when the washer (120) is in the retainer (180).

27. An apparatus (111) as described in Claim 25 characterized by the fact that the retainer (180) is comprised of a third prong (580) disposed adjacent the first and second prongs (260) and (280), respectively, and opposing the stop (220).

28. A ladder (10) according to Claim 2 characterized in that the joints between rails, steps and braces are rivetted while placing a washer (120) at the deformed side of the rivets located at the inner side of the u-profiles of brace (100) and stile (102), the washer (120) is automatically held in position before riveting in a retainer device (180) at the said inner sides.

## Patentansprüche

1. Leiter (10), umfassend ein Paar im Wesentlichen senkrechter Schienen (102) mit U-förmigem Querschnitt, eine Anzahl waagrechter Stufen (104) sowie Streben (100), welche die Schienen (102) mit den Stufen (104) verbinden, wobei die Streben (100) umfassen:
ein erstes Teilstück (30), das mit den Stufen (104) verbunden ist, und
ein zweites Teilstück (32), das mit der Schiene (102) verbunden ist, wobei das zweite Teilstück (32) mit dem ersten Teilstück (30) einstückig verbunden ist,
so dass das erste und das zweite Teilstück ein einzelnes durchgehendes Stück (100) bilden, wobei das zweite Teilstück (32) in einem Winkel von weniger als 90° zum ersten Teilstück (30) steht, dadurch gekennzeichnet,
dass die Enden der Stufen (104) an der Verbindung (51b) fest mit der Schiene verbunden sind, wobei das zweite Teilstück (32) der Strebe (100) in einem Abstand zur Verbindung (51b) endet, und
dass das zweite Teilstück (32) der Strebe drei Kontaktflächen (73, 75, 77) besitzt, die mit der Schiene verbunden sind und die im Wesentlichen parallel zur Schiene (102) verlaufen, und das an die Schiene (102) angepasst ist, mit der es derart verbunden ist, dass Kräfte darüber übertragen werden können, wobei zwei Kontaktflächen die Seitenflächen berühren und eine Kontaktfläche die Rippe der Schiene mit U-förmigem Querschnitt berührt.

2. Leiter nach Anspruch 1, dadurch gekennzeichnet, dass die Strebe (100) im Wesentlichen eine gerade Konfiguration aufweist, die Stufe (104) U-förmigen Querschnitt hat, und das Ende (48) des ersten Teilstücks (30) der Strebe (100) derart geformt ist, dass drei seiner Flächen die drei Innenflächen der Stufe (104) berühren und die Enden der Strebe (100) fest mit den Flanschen der Schiene (102) verbunden sind.

3. Leiter (10) nach Anspruch 2, dadurch gekennzeichnet, dass das zweite Teilstück (32) ein erstes Ende (34) besitzt, das an das erste Teilstück (30) gebunden ist, sowie ein zweites Ende (36), das einen Fuß (38) umfasst, der zusammenhängend mit dem zweiten Ende (36) des zweiten Teilstücks (32) verbunden ist, so dass er ein durchgehendes Stück damit bildet, und der Fuß (38) den Boden der Schiene (102) aufnimmt, so dass eine Last auf der Schiene (102) auf den Fuß (38) oder das zweite Teilstück (32) übertragen wird.

4. Leiter (10) nach Anspruch 3, dadurch gekennzeichnet, dass das erste Teilstück (30), das zweite Teilstück (32), und der Fuß (38) ein durchgehendes Kunststoffteil sind.

5. Leiter (10) nach Anspruch 4, dadurch gekennzeichnet, dass das erste Teilstück (30) einen Winkel θ von 30 bis 60° mit dem zweiten Teilstück (32) bildet.

6. Leiter (10) nach Anspruch 5, gekennzeichnet durch eine Fußplatte (40), welche den Boden berührt, wenn sich die Schiene (102), an die sie gebunden ist, in Betriebsstellung befindet, wobei die Platte (40) an den Boden (42) des Fußes (30) gebunden ist.

7. Leiter (10) nach Anspruch 6, dadurch gekennzeichnet, dass der Fuß (38) angewinkelt ist, damit er in Bezug zum Boden eben ist, wenn sich die Schiene (102), an die er gebunden ist, in Betriebsstellung befindet.

8. Leiter (10) nach Anspruch 7, dadurch gekennzeichnet, dass die Kontaktfläche (44) des zweiten Teilstücks (32) längs verläuft und an die Schiene (102) angepasst ist und in der sich eine Befestigungsöffnung befindet.

9. Leiter (10) nach Anspruch 8, dadurch gekennzeichnet, dass das erste Teilstück (30) und das zweite Teilstück (32) Stützpfeiler (46) umfassen.

10. Leiter (10) nach Anspruch 9, dadurch gekennzeichnet, dass das erste Teilstück (30) ein Flanschstück (48) umfasst, das mit dem horizontalen Bauteil (104) verbunden ist.

11. Leiter (10) nach Anspruch 9, dadurch gekennzeichnet, dass das erste Teilstück (30) und das zweite Teilstück (32) C-förmig sind, und die Stützpfeiler (46) Querrippen (47) umfassen, die in festgelegten Abständen in der C-Form des ersten (30) bzw. zweiten Teilstücks (32) angebracht sind, wobei die Querrippen (47) mit dem ersten (30) bzw. zweiten Teilstück (32) ein durchgehendes Stück bilden.

12. Leiter (10) nach Anspruch 9, dadurch gekennzeichnet, dass das erste Teilstück (30) und das zweite Teilstück (32) C-förmig sind, und die Streben (46) eine Rippe (52) umfassen, die längs der ersten und zweiten Teilstücke (30) bzw. (32) verläuft, und in deren C-Form angeordnet ist, wobei die Rippe Druckstreben (54) aufweist, und die Rippe (52), die Druckstreben (54) und die ersten und zweiten Teilstücke (30) bzw. (32) ein durchgehendes Stück bilden.

13. Leiter (10) nach Anspruch 9, gekennzeichnet durch eine Klemme (56), die am ersten Teilstück (30) oder am zweiten Teilstück (32) befestigt ist und derart davon absteht, dass sie mit einem Klemmenaufnehmer (58) eines anderen Bauteils (100), welches an einer anderen Schiene (102) befestigt ist, bei geschlossener Leiter (10) verbunden ist.

14. Leiter (10) nach Anspruch 9, dadurch gekennzeichnet, dass das zweite Teilstück (32) einen Schutzabschnitt (60) umfasst, der über der Schiene (102) angebracht ist, an den das zweite Teilstück (32) zum Schutz der Schiene (102) befestigt ist.

15. Leiter (10) nach Anspruch 14, dadurch gekennzeichnet, dass der Schutzabschnitt (60) von der Kontaktfläche (44) ausgeht und mit dieser eine Tasche (62) definiert, die den Boden (18) der Schiene (102) aufnimmt.

16. Leiter (10) nach Anspruch 1, umfassend zumindest eine erste Vorrichtung (101) zum Halten einer Unterlegscheibe (120).

17. Leiter (10) nach Anspruch 16, dadurch gekennzeichnet, dass das erste Teilstück (30) eine zweite Vorrichtung (103) zum Halten einer Unterlegscheibe (120) umfasst.

18. Leiter (10) nach Anspruch 17, wobei jede Vorrichtung (111) zum Halten einer Unterlegscheibe (120) gekennzeichnet ist durch:
einen Träger (140) mit einer Trägerfläche (160);
einen Halter (180), der vom Träger (140) ausgeht, wobei der Halter (180) die Unterlegscheibe (120) hält und er eine Vorderseite (200) besitzt, durch die die Unterlegscheibe (120) in den Halter (180) eingeführt wird; und
eine Stoppvorrichtung (220), die vom Träger (140) absteht, wobei die Stoppvorrichtung (220) an die Vorderseite (200) des Halters (180) grenzt und der Unterlegscheibe (120) den Austritt aus dem Halter (180) verwehrt, wenn sich die Unterlegscheibe (120) im Halter (180) befindet.

19. Vorrichtung (111) nach Anspruch 18, dadurch gekennzeichnet, dass der Halter (180) und der Träger (140) einen Platz (240) definieren, in dem die Unterlegscheibe (120) zwischen der Trägeroberfläche (160) des Trägers (140) und dem Halter (180) gehalten wird.

20. Vorrichtung (111) nach Anspruch 19, dadurch gekennzeichnet, dass die Stoppvorrichtung (220) derart an die Vorderseite (200) des Halters (180) grenzt, dass die Unterlegscheibe (120) hinter die Stoppvorrichtung (220) in den Halter (180) gleiten kann.

21. Vorrichtung (111) nach Anspruch 20, dadurch gekennzeichnet, dass der Halter (180) umfasst: eine erste Gabel (260), die an die Stoppvorrichtung (220) grenzt und zumindest eine zweite Gabel (280), die sich neben der Stoppvorrichtung (220) und der ersten Gabel (260) befindet.

22. Vorrichtung (111) nach Anspruch 21, dadurch gekennzeichnet, dass jede Gabel umfasst: einen Stiel (300) mit einem oberen Ende (320) und einem unteren Ende (340), wobei der Stiel (300) mit seinem unteren Ende (340) von der Trägeroberfläche (160) ausgeht; sowie einen Flansch (360), wobei der Flansch (360) mit dem Stiel (300) und dem oberen Ende (320) des Stiels verbunden ist und der Flansch (360) zu diesem Stiel (300) in einem Winkel steht und in Richtung Mitte (380) ragt, die zwischen der ersten Gabel (260), der zweiten Gabel (280) und der Stoppvorrichtung (220) definiert wird.

23. Vorrichtung (111) nach Anspruch 22, dadurch gekennzeichnet, dass jeder Stiel (300) im Wesentlichen rechtwinklig von der Trägerfläche (160) absteht, und der Flansch (360) im Wesentlichen rechtwinklig von der Oberseite (320) des Stiels (300) absteht.

24. Vorrichtung (111) nach Anspruch 23, dadurch gekennzeichnet, dass jeder Flansch (360) zumindest soweit vom Oberteil (320) des Stiels (300) absteht, dass mindestens ein Abschnitt der Unterlegscheibe (120) bedeckt ist, wenn die Unterlegscheibe (120) sich auf dem Halter (180) befindet.

25. Vorrichtung nach Anspruch 24, wobei die Stoppvorrichtung (220), die erste Gabel (260) und die zweite Gabel (280) im Wesentlich den gleichen Abstand voneinander haben und einen Kreis (400) definieren, in dem die Unterlegscheibe (120) gehalten wird.

26. Vorrichtung (111) nach Anspruch 25, dadurch gekennzeichnet, dass die Stoppvorrichtung (220) umfasst: einen Stiel (420) mit einem oberen Ende (440) und einem unteren Ende (400), welches mit seinem unteren Ende (400) von der Trägeroberfläche (160) ausgeht, wobei der Stiel (420) eine erste Seite (480) mit einem Vorsprung (500) hat, die erste Seite (480) sich vom unteren Ende (400) des Stiels (420) zur Mitte (380) neigt, wenn der Stiel (420) sich in einer stabilen Position befindet und der Stiel (420) durch die Unterlegscheibe (120) von der Mitte (380) weg gedrückt wird, wenn die Unterlegscheibe (120) hinter den Stiel (420) in den Halter (180) geschoben wird und er dann selbständig wieder eine stabile Position einnimmt, wobei der Vorsprung (500) der ersten Seite (480) zumindest einen Abschnitt der Unterlegscheibe (120) abdeckt, wenn sich die Unterlegscheibe (120) im Halter (180) befindet.

27. Vorrichtung (111) nach Anspruch 25, dadurch gekennzeichnet, dass der Halter (180) eine dritte Gabel (580) umfasst, die an die erste und zweite Gabel (260) bzw. (280) grenzt und sich gegenüber der Stoppvorrichtung (220) befindet.

28. Leiter (10) nach Anspruch 2, dadurch gekennzeichnet, dass die Verbindungen zwischen den Schienen, Stufen und Streben vernietet werden, während eine Unterlegscheibe (120) an der gekrümmten Seite der Nieten untergebracht ist, die sich an der Innenseite der U-Profile der Strebe (100) und der Leiterschiene (102) befinden, wobei die Unterlegscheibe (120) automatisch in Stellung gehalten wird, bevor eine Haltevorrichtung (180) an den Innenseiten angenietet wird.

## Revendications

1. Echelle (10) comportant une paire de rails essentiellement verticaux (102) de section transversale en forme de U, une pluralité de barreaux horizontaux (104) et de renforts (100) pour connecter les rails (102) aux barreaux (104), lesdits renforts (100) comportant :
- une première partie (30) qui se connecte aux barreaux (104),
- et une deuxième partie (32) qui se connecte au rail (102), ladite deuxième partie (32) étant connectée de façon intégrale à la première partie (30), de telle sorte que les première et deuxième parties forment une seule pièce continue (100), ladite deuxième partie (32) étant en relation angulaire de moins de 90° avec ladite première partie (30),
caractérisée en ce que :
- les extrémités des barreaux (104) sont reliées de manière fixe au rail à une jointure (51b), la deuxième partie (32) du renfort (100) se terminant à une certaine distance depuis ladite jointure (51b),
- et la deuxième partie (32) du renfort possède trois surfaces de contact (73, 75, 77) qui se connectent au rail, et s'étendent essentiellement parallèlement au rail (102) et se conforment au rail (102) auquel elles sont attachées, de sorte que des forces peuvent être transférées entre celles-ci, deux surfaces de contact venant au contact des faces latérales et une surface de contact venant au contact de l'âme du rail de section transversale en forme de U.

2. Echelle selon la revendication 1, caractérisée en ce que le renfort (100) possède une configuration essentiellement droite, le barreau (104) a une section transversale en forme de U, l'extrémité (48) de la première partie (30) du renfort (100) est formée de telle sorte que trois faces de celle-ci viennent en contact avec les trois faces intérieures du barreau (104), et les extrémités du renfort (100) sont reliées de manière fixe aux rebords du rail (102).

3. Echelle (10) selon la revendication 2, caractérisée en ce que la deuxième partie (32) possède une première extrémité (34) connectée à la première partie (30) et une deuxième extrémité (36) comprenant un pied (38) connecté de façon intégrale à la deuxième extrémité (36) de la deuxième partie (32) afin de former une pièce unique continue avec celle-ci, ledit pied (38) étant disposé pour recevoir l'extrémité la plus inférieure du rail (102) de sorte qu'un poids sur le rail (102) soit transféré au pied (38) ou à la deuxième partie (32).

4. Echelle (10) selon la revendication 3, caractérisée en ce que la première partie (30), la deuxième partie (32) et le pied (38) forment une pièce unique continue de matériau plastique.

5. Echelle (10) selon la revendication 4, caractérisée en ce que la première partie (30) forme un angle θ de 30 à 60° avec la deuxième partie (32).

6. Echelle (10) selon la revendication 5, caractérisée en ce qu'un tampon de pied (40) vient au contact du sol lorsque le rail (102), auquel il est attaché, est en position d'utilisation, ledit tampon (40) étant attaché à la surface la plus inférieure (42) du pied (30).

7. Echelle (10) selon la revendication 6, caractérisée en ce que le pied (38) forme un angle afin d'être disposé à plat par rapport au sol lorsque le rail (102) auquel il est attaché est en position d'utilisation.

8. Echelle (10) selon la revendication 7, caractérisée en ce que la deuxième partie (32) possède une surface de contact (44) qui s'étend le long du rail (102) et se conforme à celui-ci et dans laquelle est formée une ouverture de fixation.

9. Echelle (10) selon la revendication 8, caractérisée en ce que la première partie (30) et la deuxième partie (32) comportent un arc-boutement (46).

10. Echelle (10) selon revendication 9, caractérisée en ce que la première partie (30) comprend une partie en rebord (48) qui se connecte à l'organe horizontal (104).

11. Echelle (10) selon la revendication 9, caractérisée en ce que la première partie (30) et la deuxième partie (32) ont la forme d'un C et l'arc-boutement (46) comprend des plaques transversales (47) disposées en des emplacements prédéterminés de la forme en C des première et deuxième parties (30) et (32) respectivement, lesdites plaques transversales (47) formant une seule pièce continue avec les première et deuxième parties (30) et (32) respectivement.

12. Echelle (10) selon la revendication 9, caractérisée en ce que la première partie (30) et la deuxième partie (32) ont la forme d'un C, et l'arc-boutement (46) comprend une nervure (52) s'étendant le long des première et deuxième parties (30) et (32) respectivement, et disposée dans la forme en C de celles-ci, ladite nervure ayant des supports (54), ladite nervure (52), les supports (54) et les première et deuxième parties (30) et (32) respectivement, formant une seule pièce continue.

13. Echelle (10) selon la revendication 9, caractérisée en ce qu'une attache (56) est attachée à la première partie (30) ou à la deuxième partie (32), qui s'étend à partir de là pour se connecter à un récepteur d'attache (58) d'un autre organe (100) attaché à un autre rail (102) lorsque l'échelle (10) est fermée.

14. Echelle (10) selon la revendication 9, caractérisée en ce que la deuxième partie (32) comprend une section de garde (60), qui est positionnée autour du rail (102) auquel la deuxième partie (32) est attachée, afin de protéger le rail (102).

15. Echelle (10) selon la revendication 14, caractérisée en ce que la section de garde (60) s'étend à partir de la surface de contact (44) et définit une poche (62) avec celle-ci pour recevoir l'extrémité inférieure (18) du rail (102).

16. Echelle (10) selon la revendication 1, caractérisée en ce qu'elle comprend au moins un premier appareil (101) pour maintenir une rondelle (120).

17. Echelle (10) selon la revendication 16, caractérisée en ce que la première partie (30) comprend un deuxième appareil (103) pour maintenir une rondelle (120).

18. Echelle (10) selon la revendication 17, dans laquelle chaque appareil (111) pour maintenir une rondelle (120), caractérisé en ce qu'il comporte :
- un support (140) ayant une surface dorsale (160),
- un dispositif de retenue (180) s'étendant depuis le support (140), ledit dispositif de retenue (180) maintenant la rondelle (120), ledit dispositif de retenue (180) ayant une partie avant (200) à travers laquelle la rondelle (120) est introduite dans le dispositif de retenue (180) ; et
- une butée (220) s'étendant à partir du support (140), ladite butée (220) étant disposée au voisinage de la partie avant (200) du dispositif de retenue (180) et empêchant la rondelle (120) de s'échapper du dispositif de retenue (180) lorsque la rondelle (120) se trouve dans le dispositif de retenue (180).

19. Appareil (111) selon la revendication 18, caractérisé en ce que le dispositif de retenue (180) et le support (140) définissent une fente (240) dans laquelle la rondelle (120) est maintenue entre la surface dorsale (160) du support (140) et le dispositif de retenue (180).

20. Appareil (111) selon la revendication 19, caractérisé en ce que la butée (220) est disposée au voisinage de la partie avant (200) du dispositif de retenue (180), de telle sorte que la rondelle (120) puisse glisser au-delà de la butée (220) jusque dans le dispositif de retenue (180).

21. Appareil (111) selon la revendication 20, caractérisé en ce que le dispositif de retenue (180) comporte une première griffe (260) disposée au voisinage de la butée (220), et au moins une deuxième griffe (280) disposée au voisinage de la butée (220) et de la première griffe (260).

22. Appareil (111) selon la revendication 21, caractérisé en ce que chaque griffe est constituée par un axe (300) ayant un sommet (320) et une extrémité inférieure (340), ledit axe (300) s'étendant à partir de la surface dorsale (160) à l'extrémité inférieure (340) de l'axe (300), et par un rebord (360), ledit rebord (360) étant connecté audit axe (300) et audit sommet (320) de l'axe, ledit rebord (360) étant en relation angulaire avec ledit axe (300), et ledit rebord (360) s'étendant dans la direction d'un centre (380) défini entre la première griffe (260), la deuxième griffe (280) et la butée (220) .

23. Appareil (111) selon la revendication 22, caractérisé en ce que chaque axe (300) s'étend essentiellement perpendiculairement à partir de la surface dorsale (160), et le rebord (360) s'étend essentiellement perpendiculairement à partir du sommet (320) de l'axe (300).

24. Appareil (111) selon la revendication 23, caractérisé en ce que chaque rebord (360) s'étend sur une distance, à partir du sommet (320) de l'axe (300), suffisante pour couvrir au moins une partie de la rondelle (120) lorsque la rondelle (120) se trouve dans le dispositif de retenue (180).

25. Appareil selon la revendication 24, caractérisé en ce que la butée (220), la première griffe (260) et la deuxième griffe (280) sont disposées essentiellement à égale distance les unes des autres et définissent un cercle (400) dans lequel la rondelle (120) est maintenue.

26. Appareil (111) selon la revendication 25, caractérisé en ce que la butée (220) est constituée par une patte (420) ayant un sommet (440) et une extrémité inférieure (400) qui s'étend à partir de la surface dorsale (160) à son extrémité inférieure (400), ladite patte (420) ayant un premier côté (480) avec une pointe (500), ledit premier côté (480) faisant un angle, à partir de l'extrémité inférieure (400) de la patte (420), vers le centre (380) lorsque la patte (420) est en position stable, ladite patte (420) étant fléchie, en s'éloignant du centre (380), par la rondelle (120) lorsque la rondelle (120) est glissée au-delà de la patte (420) dans le dispositif de retenue (180), puis retournant d'elle-même à sa position stable, ladite pointe (500) dudit premier côté (480) couvrant au moins une partie de la rondelle (120) lorsque la rondelle (120) se trouve dans le dispositif de retenue (180).

27. Appareil (111) selon la revendication 25, caractérisé en ce que le dispositif de retenue (180) comporte une troisième griffe (580) disposée au voisinage des première et deuxième griffes (260) et (280), respectivement, face à la butée (220).

28. Echelle (10) selon la revendication 2, caractérisée en ce que les jointures entre les rails, les barreaux et les renforts sont rivetés en plaçant une rondelle (120) du côté déformé des rivets disposés du côté intérieur des profils en U des renforts (100) et des montants (102), la rondelle (120) étant automatiquement maintenue en position, avant le rivetage, dans un dispositif de retenue (180) au niveau desdits côtés intérieurs.
